# EUROPEAN PATENT SPECIFICATION

(11) **EP 4 390 628 B1**
(45) Date of publication and mention of the grant of the patent: **07.10.2026**
(21) Application number: 22882455.3
(22) Date of filing: 31.08.2022
(51) Int. Cl.: G06F 3/01, G06F 3/16, G06F 3/0486, G06F 3/0488, G06F 3/04817

(54) **TOUCH FEEDBACK METHOD AND ELECTRONIC DEVICE**
BERÜHRUNGSFEEDBACKVERFAHREN UND ELEKTRONISCHE VORRICHTUNG
PROCÉDÉ DE RÉTROACTION TACTILE ET DISPOSITIF ÉLECTRONIQUE

(30) Priority: 20.10.2021 CN 202111219989
(43) Date of publication of application: 26.06.2024
(73) Proprietor: Huawei Technologies Co., Ltd., Shenzhen, Guangdong 518129 (CN)
(72) Inventor: ZHANG, Chao, Shenzhen, Guangdong 518129 (CN); JIN, Wei, Shenzhen, Guangdong 518129 (CN)
(74) Representative: Epping - Hermann - Fischer
(86) International application number: PCT/CN2022/116339
(87) International publication number: WO 2023/065839

(56) References cited:
- EP-A2- 2 101 246
- CN-A- 102 422 712
- CN-A- 102 651 915
- CN-A- 103 869 950
- CN-A- 110 109 730
- CN-A- 114 077 373
- US-A1- 2009 013 254
- US-A1- 2009 228 820
- US-A1- 2010 178 873
- US-A1- 2016 117 076
- US-A1- 2017 228 151

## Description

### TECHNICAL FIELD

This application relates to the field of terminal technologies, and in particular, to a touch feedback method, an electronic device, and a computer-readable storage medium.

### BACKGROUND

Displays of most electronic devices are touchscreens, and a user implements interaction with the electronic device by using the touchscreen. To improve interaction experience, when the user performs a touch operation on the touchscreen, the operation is accompanied with a touch feedback, for example, a sound feedback. For example, there is a sound feedback for a tapping operation (for example, tapping a letter key in a keyboard input interface), or there is a sound feedback for a sliding operation (for example, sliding to delete a contact).

Currently, a sound feedback for a touch operation performed by a user on an electronic device is usually fixed. A sliding operation is used as an example. No matter how the user performs the sliding operation (a sliding speed is fast or slow, or touch pressure is high or low during sliding), a sound feedback for the sliding operation is fixed. This manner is not flexible enough, and a fixed sound feedback cannot make the user feel a difference between different touch operations, resulting in poor experience.

US 2010/178873 A1 discloses a mobile terminal and controlling method by which a specific one of various external devices neighboring a mobile terminal may be easily searched and may be connected to the mobile terminal by short-range communication.

US 2016/117076 A1 discloses a mobile terminal including a display unit, a wireless communication unit, and a controller. The controller displays a my device object corresponding to the mobile terminal, at least one first external device object corresponding to at least one first external device connected to the mobile terminal with wireless communication through the wireless communication unit, and at least one connectable second external device object in correspondence to at least one second external device connectable to the mobile terminal with wireless communication through the wireless communication unit. The controller displays a line indicating that wireless communication is connected between the my device object and the first external device object when the mobile terminal and the first external device are connected to each other through wireless communication.

US 2009/0228820 Al discloses a user interface method and apparatus for a mobile terminal having a touchscreen. An interface apparatus includes a touchscreen unit that displays a screen including a second region for presenting a toolbar having at least one User Interface (UI) element representing a specific function and a first region for activating, when the UI element is dragged from the toolbar and dropped in the first region on the touchscreen, the function represented by the UI element. The interface apparatus also includes a control unit which detects a drag and drop action of the UI element and activates, when the drag and drop action is detected, the function associated with the UI element in the form of an active function object. The interface apparatus of the present invention registers the frequently used functions with the toolbar in the form of icons such that, when an icon is dragged from the toolbar to the main window, the function represented by the icon is activated.

### SUMMARY

An objective of this application is to provide a touch feedback method and an electronic device, to improve touch experience. The invention is set out by the appended claims. In the following, parts of the description and drawings referring to examples which are not covered by the claims are not presented as embodiments of the invention, but as examples useful for understanding the invention.

According to a first aspect, a touch feedback method is provided, and is applied to a first electronic device. The first electronic device is, for example, a mobile phone or a tablet computer. The first electronic device displays a first interface in response to a first operation, where the first interface includes a first identifier of the first electronic device, a second identifier of a second electronic device, and a third identifier of a third electronic device, and the second electronic device and the third electronic device are surrounding devices that are found by the first electronic device through scanning; in response to a first dragging operation, the first electronic device outputs a first sound feedback, and establishes a connection to the second electronic device, where the first dragging operation is used to drag the second mark so that the second electronic device establishes the connection to the first electronic device; and in response to a second dragging operation, the first electronic device outputs a second sound feedback, and establishes a connection to the third electronic device, where the second dragging operation is used to drag the third mark so that the third electronic device establishes the connection to the first electronic device, where the second sound feedback is different from the first sound feedback when at least one of a device type, a volume, a weight, and a material of the third electronic device is different from a device type, a volume, a weight, and a material of the second electronic device.

In this embodiment of this application, a user may open the first interface on the first electronic device, and drag an identifier in the first interface to connect a device corresponding to the identifier to the first electronic device. To improve touch experience, a sound feedback may be generated when the identifier is dragged, and different sound feedbacks are generated when different identifiers are dragged. This avoids a tedious feeling caused by a single sound feedback, and further improves interaction experience.

In some possible designs, that the second sound feedback is different from the first sound feedback includes: At least one of a sound type, loudness, a tone, a sound channel, and duration of the second sound feedback is different from a sound type, loudness, a tone, a sound channel, and duration of the first sound feedback.

In this embodiment of this application, the sound feedback includes a plurality of attributes such as a sound type, loudness, a tone, a sound channel, and duration. Two types of sound feedbacks being different may be that at least one of a plurality of attributes of the two types of sound feedbacks is different. This is not limited in this embodiment of this application.

In some possible designs, that the second sound feedback is different from the first sound feedback includes: When at least one of the following conditions is met, the second sound feedback is different from the first sound feedback, where the conditions include:
a distance from the second electronic device to the first electronic device is different from a distance from the third electronic device to the first electronic device;
the second electronic device and the third electronic device are located in different directions of the first electronic device;
a distance from the second mark to the first mark is different from a distance from the third mark to the first mark;
the second mark and the third mark are located in different directions of the first mark;
a dragging speed of the first dragging operation is different from a dragging speed of the second dragging operation; and
touch pressure of the first dragging operation on a touchscreen is different from touch pressure of the second dragging operation on the touchscreen.

In this embodiment of this application, when a user drags an identifier in the first interface of the first electronic device, a generated sound feedback is related to at least one of the following: a type, a volume, a weight, and a material of a device corresponding to the identifier; a distance and a direction between the device and the first electronic device; a distance and a direction between the identifier and the identifier of the first electronic device; a dragging speed; dragging pressure; and the like. In this way, the sound feedback is more flexible.

In some possible designs, that the second sound feedback is different from the first sound feedback includes: When at least one of the following conditions is met, the loudness and/or the tone of the first sound feedback are/is greater than the loudness and/or the tone of the second sound feedback, where the conditions include:
the distance from the second identifier to the first identifier is greater than the distance from the third identifier to the first identifier;
the distance from the second electronic device to the first electronic device is greater than the distance from the third electronic device to the first electronic device;
the dragging speed of the first dragging operation is greater than the dragging speed of the second dragging operation;
the touch pressure of the first dragging operation is greater than the touch pressure of the second dragging operation;
the volume of the second electronic device is greater than the volume of the third electronic device;
the weight of the second electronic device is greater than the weight of the third electronic device; and
material hardness of the second electronic device is greater than material hardness of the third electronic device.

In some possible designs, that the second sound feedback is different from the first sound feedback includes: When at least one of the following conditions is met, the duration of the first sound feedback is greater than the duration of the second sound feedback, where the conditions include:
the distance from the second identifier to the first identifier is greater than the distance from the third identifier to the first identifier; and
the distance from the second electronic device to the first electronic device is greater than the distance from the third electronic device to the first electronic device.

In other words, if two identifiers are farther, or a distance between devices corresponding to the two identifiers is longer, duration of a sound feedback is longer. This sound feedback manner meets an actual situation, and user experience is better.

In a possible design, that the second sound feedback is different from the first sound feedback includes:
when the following condition is met, a sound source direction indicated by the first sound feedback is a first direction, where the condition includes: the second identifier is located in the first direction of the first identifier, and/or the second electronic device is located in the first direction of the first electronic device; and
when the following condition is met, a sound source direction indicated by the second sound feedback is a second direction, where the condition includes: the third identifier is located in the second direction of the first identifier, and/or the second electronic device is located in the second direction of the first electronic device.

For example, when a user drags the second identifier in the first interface of the first electronic device, the generated sound feedback can indicate a direction of the second identifier relative to the first identifier (an identifier corresponding to the first electronic device). For example, the second identifier is located at a left rear side of the first identifier, and the user may feel, through the sound feedback, that the sound comes from the left rear side. This sound feedback manner can provide good interaction experience.

For another example, when the user drags the second identifier in the first interface of the first electronic device, the generated sound feedback can indicate an actual direction of the second electronic device corresponding to the second identifier relative to the first electronic device. For example, the second electronic device is located at a left rear side of the first electronic device, and the user may feel, through the sound feedback, that the sound comes from the left rear side. This sound feedback manner complies with a direction relationship between devices in a real environment, and can provide good interaction experience.

In a possible design, that a sound source direction indicated by the first sound feedback is a first direction includes: The first sound feedback includes first left sound channel information and first right sound channel information, a phase difference between the first left sound channel information and the first right sound channel information is a first phase difference, and the first phase difference is used to determine that the sound source direction is the first direction; and that a sound source direction indicated by the second sound feedback is a second direction includes: the second sound feedback includes second left sound channel information and second right sound channel information, a phase difference between the second left sound channel information and the second right sound channel information is a second phase difference, and the second phase difference is used to determine that the sound source direction is the second direction. Therefore, in this embodiment of this application, when an identifier is dragged, a generated sound feedback may indicate direction information, thereby helping improve touch experience.

In a possible implementation, the method further includes: A first distance from the second identifier to the first identifier in the first interface is positively correlated with a second distance from the second electronic device to the first electronic device; and/or
the first direction of the first identifier in which the second identifier is located in the first interface is consistent with the second direction of the first electronic device in which the second electronic device is located; and/or
a third distance from the third identifier to the first identifier in the first interface is positively correlated with a fourth distance from the third electronic device to the first electronic device; and/or
a third direction of the first identifier in which the third identifier is located in the first interface is consistent with a fourth direction of the first electronic device in which the third electronic device is located.

In this embodiment of this application, the user may open the first interface on the first electronic device, where the first interface includes an identifier corresponding to a surrounding device of the first electronic device, for example, the second identifier corresponding to the second electronic device and the third identifier corresponding to the third electronic device. In addition, position distribution of each identifier in the first interface is related to position distribution of each device in a real environment. For example, in the real environment, the second electronic device is located at a left rear side of the first electronic device, and in the first interface, the second identifier is located at a left rear side of the first identifier. Therefore, by using the first interface, the user may know which devices are around the first electronic device, and may know position distribution of the surrounding devices, and user experience is good.

In a possible design, the first dragging operation is used to drag the second identifier to move to a position of the first identifier. For example, the first dragging operation is used to drag the second mark to move to the position of the first mark and not be in contact with the first mark, or the first dragging operation is used to drag the second mark to move to the position of the first mark and be in contact with the first mark; and/or the second dragging operation is used to drag the third identifier to move to the position of the first identifier. For example, the second dragging operation is used to drag the third mark to move to the position of the first mark and not be in contact with the first mark, or the second dragging operation is used to drag the second mark to move to the position of the first mark and be in contact with the first mark.

It should be noted that the first dragging operation may be alternatively implemented in another manner, provided that the operation enables the second electronic device to connect to the first electronic device. Similarly, the second dragging operation may be alternatively implemented in another manner, provided that the operation enables the third electronic device to connect to the first electronic device. This is not limited in this embodiment of this application.

In a possible design, the method further includes: When the first dragging operation is used to drag the second mark to move to the position of the first mark and be in contact with the first mark, the first sound feedback includes a third sound feedback and a fourth sound feedback, where the third sound feedback is a corresponding sound feedback from a moment when the second identifier starts to move to a moment before the second identifier is in contact with the first identifier, and the fourth sound feedback is a corresponding sound feedback at a moment when the second identifier is in contact with the first identifier; and/or
when the second dragging operation is used to drag the second mark to move to the position of the first mark and be in contact with the first mark, the second sound feedback includes a fifth sound feedback and a sixth sound feedback, where the fifth sound feedback is a corresponding sound feedback from a moment when the third identifier starts to move to a moment before the third identifier is in contact with the first identifier, and the sixth sound feedback is a corresponding sound feedback at a moment when the third identifier is in contact with the first identifier.

The first dragging operation is used as an example. Because the first dragging operation is used to drag the second mark to move to the position of the first mark and be in contact with the first mark, there is a corresponding sound feedback (namely, the third sound feedback) from the moment when the second identifier starts to move to the moment before the second identifier is in contact with the first identifier, and there is another corresponding sound feedback (namely, the fourth sound feedback) at the moment when the second identifier is in contact with the first identifier. For example, the corresponding sound feedback from the moment when the second identifier starts to move to the moment before the second identifier is in contact with the first identifier is "ding", and the corresponding sound feedback at the moment when the second identifier is in contact with the first identifier is a collision sound of "clang". In this manner, there are rich sound feedbacks, and user experience is good.

In some embodiments, the third sound feedback and the fourth sound feedback are different types of sounds, and/or the fifth sound feedback and the sixth sound feedback are different types of sounds. The sound type may be, for example, "ding", "rub-a-dub", or "clang", or may be a music segment.

In a possible design, when the first dragging operation is used to drag the second mark to move to the position of the first mark, in a process of outputting the first sound feedback, the loudness and/or the tone of the first sound feedback decrease/decreases as at least one of the following:
the distance from the second identifier to the first identifier decreases, the dragging speed of the first dragging operation decreases, and the touch pressure of the first dragging operation decreases; and/or
when the first dragging operation is used to drag the third mark to move to the position of the first mark, in a process of outputting the second sound feedback, the loudness and/or the tone of the second sound feedback decrease/decreases as at least one of the following: the distance from the third identifier to the first identifier decreases, the dragging speed of the second dragging operation decreases, and the touch pressure of the second dragging operation decreases.

The first dragging operation is used as an example. Because the first dragging operation is used to drag the second mark to move to the position of the first mark, the second identifier gradually approaches the first identifier, and there is always a sound feedback in an approaching process. In addition, loudness and/or a tone of the sound feedback dynamically change/changes, for example, decreases as at least one of the following: the distance from the second identifier to the first identifier decreases, the dragging speed of the first dragging operation decreases, or the touch pressure of the first dragging operation decreases. In this manner, the tone and the loudness of the sound feedback change with the distance between different identifiers, and experience is good.

In a possible design, the first sound feedback and the second sound feedback are a same type of sound. The sound type may be, for example, "ding", "rub-a-dub", or "clang", or may be a music segment. This is not limited in this embodiment of this application.

According to a second aspect, an electronic device is further provided. The electronic device includes:
a processor, a memory, and one or more programs.

The one or more programs are stored in the memory, the one or more programs include instructions, and when the instructions are executed by the processor, the electronic device is enabled to perform the method steps according to the first aspect.

According to a third aspect, a computer-readable storage medium is further provided, and the computer-readable storage medium is configured to store a computer program. When the computer program is run on a computer, the computer is enabled to perform the method according to the first aspect.

According to a fourth aspect, a computer program product is provided. The computer program product includes a computer program, and when the computer program is run on a computer, the computer is enabled to perform the method according to the first aspect.

According to a fifth aspect, a graphical user interface on an electronic device is further provided. The electronic device has a display, a memory, and a processor, the processor is configured to execute one or more computer programs stored in the memory, and the graphical user interface includes a graphical user interface displayed when the electronic device performs the method according to the first aspect.

According to a sixth aspect, an embodiment of this application further provides a chip system. The chip system is coupled to a memory in an electronic device, and is configured to invoke a computer program stored in the memory and execute the technical solution according to the first aspect of embodiments of this application. "Coupling" in embodiments of this application means that two components are directly or indirectly combined with each other.

For beneficial effect of the second aspect to the sixth aspect, refer to the beneficial effect of the first aspect. Details are not described again.

### BRIEF DESCRIPTION OF DRAWINGS

FIG. 1 to FIG. 3 are schematic diagrams of an application scenario according to an embodiment of this application;
FIG. 4 is a schematic diagram of a hardware structure of an electronic device according to an embodiment of this application;
FIG. 5 is a schematic diagram of a software structure of an electronic device according to an embodiment of this application;
FIG. 6 is a schematic flowchart of a touch feedback method according to an embodiment of this application;
FIG. 7 is another schematic flowchart of a touch feedback method according to an embodiment of this application; and
FIG. 8 is a schematic diagram of a structure of an electronic device according to an embodiment of this application.

### DESCRIPTION OF EMBODIMENTS

The touch feedback method provided in embodiments of this application is applicable to an electronic device. In some embodiments, the electronic device may have a touchscreen. For example, the electronic device may be a convenient electronic device such as a mobile phone, a tablet computer, or a notebook computer, or may be a wearable device such as a watch or a band, or may be a smart home device such as a television or a refrigerator, or may be an in-vehicle device such as an in-vehicle display. In conclusion, a specific type of the electronic device is not limited in embodiments of this application.

In some embodiments, the electronic device (the electronic device to which the touch feedback method provided in this embodiment of this application is applicable) may be an electronic device in a communication system. The communication system includes a plurality of devices, and different devices may establish connections, to implement data transmission between the different devices. In some embodiments, the communication system may be referred to as a super terminal, a super terminal group, a super terminal system, multi-device collaboration, multi-device interconnection and interworking, or the like. In the following embodiments, an example in which the communication system is referred to as a "super terminal" is used. In embodiments of this application, when a user performs a touch operation on an electronic device in the super terminal to implement a connection to another device, the electronic device may output a sound feedback, which helps improve interaction experience.

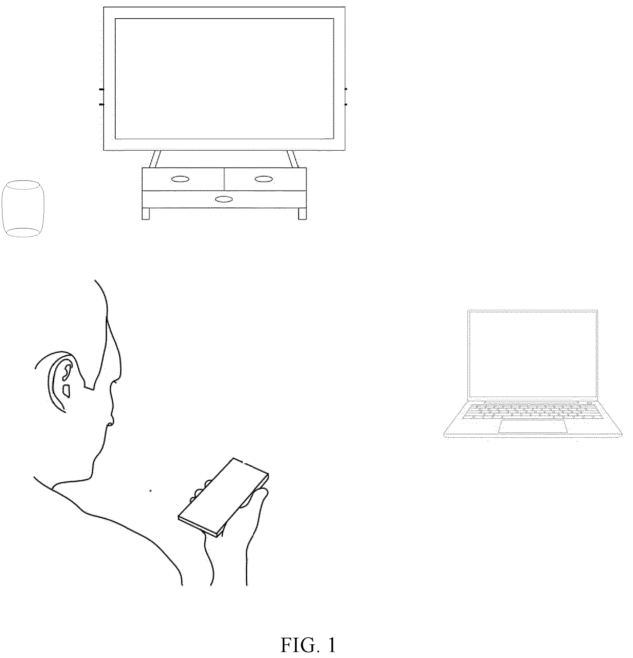

For example, FIG. 1 to FIG. 3 are schematic diagrams of an application scenario according to an embodiment of this application. In this scenario, a super terminal scenario is used as an example. As shown in FIG. 1, an environment (for example, at home) in which a user is located includes N electronic devices. N is an integer greater than or equal to 2. Device types of the N electronic devices may be the same or different. For example, the N electronic devices are all mobile phones or tablet computers; or the N electronic devices include a mobile phone, a tablet computer, an all-in-one machine, a television, and the like. Applications (application, app for short) in the N electronic devices may be the same or different. The application includes an instant messaging application, a video application, an audio application, an image shooting application, and the like. The instant messaging application may include, for example, MeeTime, WeChat^{®} (WeChat^{®}), WhatsApp Messenger^{®}, Line^{®} (Line^{®}), Instagram (Instagram), Kakao Talk^{®}, and DingTalk^{®}. The image shooting application may include, for example, a camera application (a system camera or a third-party camera application). The video application may include, for example, YouTube^{®}, Twitter^{®}, TikTok^{®}, iQIYI^{®}, and Tencent Video^{®}. The audio application may include, for example, Google Music^{®}, Xiami^{®}, QQ Music^{®}, and the like. The application in the electronic device may be an application installed before delivery of the electronic device, or may be an application downloaded from a network or obtained by the user from another electronic device in a process of using the electronic device. This is not limited in this embodiment of this application. It should be noted that, in FIG. 1, N=4 is used as an example, and the N electronic devices are a mobile phone held by the user, a television, a sound box, and a notebook computer.

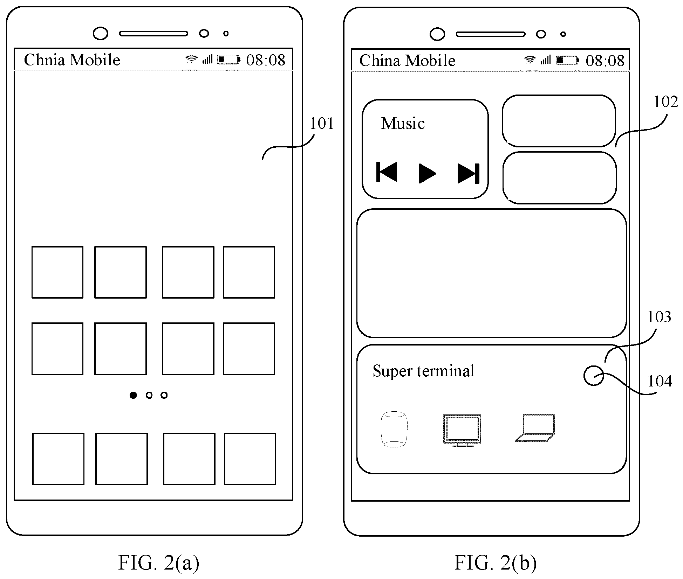

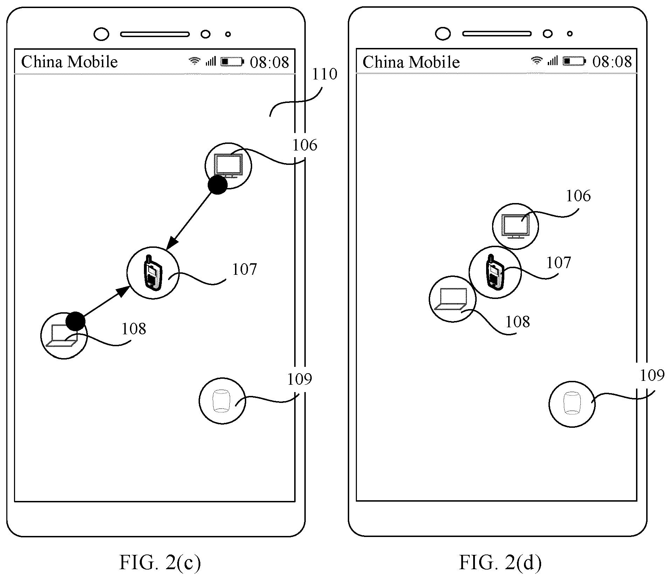

A connection may be established between the N electronic devices. The mobile phone is used as an example. The mobile phone may establish a connection to another device. For example, as shown in FIG. 2(a), the mobile phone displays a home screen 101, and the home screen 101 includes icons of various applications. When the mobile phone detects a preset operation (for example, an operation of sliding in a direction from top to bottom in a screen of the home screen 101), the mobile phone displays a control center interface 102 shown in FIG. 2(b). The control center interface 102 includes a super terminal window 103. Identifiers of surrounding devices found by the mobile phone through searching are displayed in the super terminal window 103. When detecting an operation on a mark 104 in the super terminal window 103, the mobile phone displays a first interface 110 shown in FIG. 2(c). Identifiers of devices found by the mobile phone through scanning are displayed in the first interface 110, for example, a television identifier 106, a notebook computer identifier 108, a sound box mark 109, and a mobile phone identifier 107. For example, each identifier may be displayed in a bubble or in another form. This is not limited in this application. It may be understood that, to improve experience, the mobile phone identifier 107 is located in a middle position of the first interface 110, and other marks are distributed around the mobile phone identifier 107, which is used to represent that devices around the mobile phone include the television, the notebook computer, and the sound box. In this way, the devices around the mobile phone may be presented to the user by using the first interface 110, and experience is good.

In some embodiments, if the user wants to connect the mobile phone to a device, the user may drag, in the first interface 110, an identifier corresponding to the device to the mobile phone identifier 107, to connect the device to the mobile phone.

For example, as shown in FIG. 2(c), the mobile phone establishes a connection between the mobile phone and the television in response to a first dragging operation of dragging the television identifier 106 to the mobile phone identifier 107. For example, the first dragging operation may be an operation of making the television identifier 106 approach the mobile phone identifier 107 but not be in contact with the mobile phone identifier 107, or an operation of making the television identifier 106 approach the mobile phone identifier 107 and be in contact with the mobile phone identifier 107. This is not limited in this embodiment of this application. In this manner of establishing a device connection by dragging an identifier, an operation is convenient and experience is good. Optionally, if the mobile phone is successfully connected to the television, the mobile phone may display an interface shown in FIG. 2(d). The television identifier 106 and the mobile phone identifier 107 are displayed next to (or attached to, overlapping, or absorbed to) each other in the interface, indicating that the mobile phone is connected to the television. That is, the user drags the television identifier 106 to a position of the mobile phone identifier 107. If the television identifier 106 is close to the mobile phone identifier 107, it indicates that the television is successfully connected to the mobile phone, which has effect of prompting the user. It may be understood that, if the mobile phone fails to connect to the television, the television identifier 106 may be restored to a position in FIG. 2(c), and the user may drag the television identifier 106 to the mobile phone identifier 107 again to attempt to connect again. Therefore, in this manner, the user can intuitively perceive a connection result (a connection success or a connection failure) of the two devices.

For another example, as shown in FIG. 2(c), the mobile phone establishes a connection between the mobile phone and the notebook computer in response to a second dragging operation of dragging the notebook computer identifier 108 to the mobile phone identifier 107. For example, the second dragging operation may be an operation of making the notebook computer identifier 108 approach the mobile phone identifier 107 but not be in contact with the mobile phone identifier 107, or an operation of making the notebook computer identifier 108 approach the mobile phone identifier 107 and be in contact with the mobile phone identifier 107. This is not limited in this embodiment of this application. Optionally, if the mobile phone is successfully connected to the notebook computer, the mobile phone displays an interface shown in FIG. 2(d). The notebook computer identifier 108 and the mobile phone identifier 107 are displayed next to (or attached to, overlapping, or adsorbed to) each other in the interface, indicating that the mobile phone is connected to the notebook computer. It may be understood that, if the mobile phone fails to be connected to the notebook computer, the notebook computer identifier 108 is restored to a position in FIG. 2(c), indicating that the connection fails.

Therefore, in the foregoing manner, the user can quickly and efficiently implement a connection between the mobile phone and another device in the first interface 110, and can intuitively perceive a connection result. After being connected to the another device, the mobile phone may perform data transmission with the device. For example, after the mobile phone is connected to the television, a display interface (for example, an interface of a movie or a television series) of a video playing application in the mobile phone may be displayed by using the television. In this way, the user can watch the movie or the television series on a large-screen device. Alternatively, after the mobile phone is connected to the notebook computer, a word (word) interface and the like in the mobile phone may be displayed by using the notebook computer. In this way, the user may edit a manuscript on the notebook computer for office work, and experience is good.

It may be understood that, the foregoing embodiment is described by using an example in which the mobile phone establishes a connection to another device (for example, the television and the notebook computer), and another device other than the mobile phone may also establish a connection to another device in this manner.

It should be noted that, in the first interface 110 shown in FIG. 2(c), a display position of each identifier is different from an actual position of each device in a real environment (namely, a real environment shown in FIG. 1). For example, in FIG. 2(c), the television identifier 106 is located at a right front side of the mobile phone identifier 107, and in the real environment shown in FIG. 1, the television is located at a left front side of the mobile phone. Therefore, in some embodiments, after finding a surrounding device through scanning, the mobile phone displays, in the first interface 110, an identifier corresponding to the device found through scanning, without considering an actual position of each device. This manner is easy to implement, and the user may know, by using the first interface 110, devices around the mobile phone. In some other embodiments, the display position of each identifier in the first interface 110 may be related to the actual position of each device in the real environment. For example, at least one of the following manner 1 or manner 2 is included.

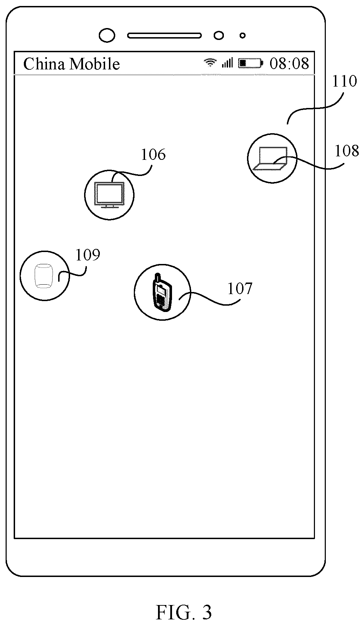

Manner 1: A distance between two identifiers in the first interface 110 is positively correlated with an actual distance between devices corresponding to the two identifiers. That is, a longer actual distance between the two devices indicates a longer distance between the identifiers corresponding to the two devices. For example, if the actual distance between the two devices is L, the distance between the two identifiers is L/n, where n may be a positive integer. In other words, the actual distance is scaled down by a specific proportion. For example, n=100. Assuming that a real distance between the television and the mobile phone in FIG. 1 is 2 m, a distance between the television identifier 106 and the mobile phone identifier 107 is 0.02 m. Assuming that a real distance between the notebook computer and the mobile phone in FIG. 1 is 4 m, a distance between the notebook computer identifier 108 and the mobile phone identifier 107 is 0.04 m. For example, FIG. 3 is another schematic diagram of the first interface 110. In the first interface 110, the television identifier 106 is closer to the mobile phone identifier 107 (for example, 0.02 cm), and the notebook computer identifier is farther from the mobile phone identifier 107 (for example, 0.04 m). In this way, the user may perceive, by using a distance between two identifiers in the first interface 110, a real distance between two devices corresponding to the two identifiers. It may be understood that, when the manner 1 is used, the mobile phone needs to determine a real distance between the surrounding device and the mobile phone. There are a plurality of specific determining manners, for example, laser measurement detection. Details are not described in this specification. Manner 2: A direction of the mobile phone identifier 107 in which an identifier is located in the first interface 110 is consistent with a real direction of the mobile phone in which a device corresponding to the identifier is located. For example, if a device is located in a first direction of the mobile phone, an identifier corresponding to the device is located in the first direction of the mobile phone identifier 107, or is located in a first direction range, where the first direction range includes the first direction. For example, in FIG. 1, if the television is located at the left front side of the mobile phone (for example, 45 degrees left of north), the television identifier 106 in the first interface 110 is located at the left front side of the mobile phone identifier 107 (for example, 45 degrees left of north), as shown in FIG. 3. For another example, in FIG. 1, if the notebook computer is located at the right front side of the mobile phone (for example, 45 degrees right of north), the notebook computer identifier 108 in the first interface 110 is located at the right front side of the mobile phone identifier 107 (for example, 45 degrees right of north), as shown in FIG. 3. In this way, the user may know an actual direction of the surrounding device by using the first interface 110, and user experience is good. It may be understood that, when the manner 2 is used, the mobile phone needs to determine a direction (for example, 45 degrees right of north or 45 degrees left of north) of the surrounding device relative to the mobile phone. There are a plurality of specific determining manners, for example, a microphone array positioning technology, a steered-beamformer (steered-beamformer) method, a high-resolution spectral analysis (high-resolution spectral analysis) orientation method, and a time-delay estimation (time-delay estimation, TDE) orientation method. Details are not described in this specification.

It can be learned from the foregoing descriptions that the first interface 110 may be shown in FIG. 2(c), or may be shown in FIG. 3. For ease of description, the following mainly uses the first interface 110 shown in FIG. 2(c) as an example for description.

To improve interaction experience, in the first interface 110 shown in FIG. 2(c), the mobile phone may output a corresponding touch feedback, for example, a sound feedback, in response to a touch operation (for example, the first dragging operation or the second dragging operation) of the user. For example, in the first interface 110 shown in FIG. 2(c), the mobile phone outputs the first sound feedback in response to the first dragging operation used to drag the television identifier 106 to the mobile phone identifier 107. The mobile phone outputs a second sound feedback in response to the second dragging operation used to drag the notebook computer identifier 108 to the mobile phone identifier 107.

In some embodiments, the first sound feedback and the second sound feedback may be the same. For example, that the first sound feedback and the second sound feedback are the same includes: At least one of a sound type, loudness, a tone, a sound channel, and duration of the first sound feedback is the same as a sound type, loudness, a tone, a sound channel, and duration of the second sound feedback. A same sound type may be understood as a same type of sound, for example, both the first sound feedback and the second sound feedback are "tinkle (tinkle), or "ding", or a same song segment or a same accompaniment segment. For ease of understanding of the loudness, the tone, and the sound channel mentioned above, the three parameters are briefly described first. The tone, also referred to as a pitch (Pitch), represents a tone of a sound. An amplitude of the tone depends on a frequency of a sound wave. A higher frequency indicates a higher tone, and a lower frequency indicates a lower tone. A unit of the tone is expressed in Hertz (Hz). The loudness is also referred to as a volume (Gain), and indicates strength of sound energy. The loudness depends on an amplitude of the sound wave. A larger amplitude indicates larger loudness, and a smaller amplitude indicates lower loudness. A unit of loudness is generally decibel (dB). It may be understood that the tone and the loudness are two different attributes of a sound. Loudness of a sound (for example, a soprano) with a higher tone is not necessarily high, and loudness of a sound (for example, a bass) with a lower tone is not necessarily low. To clearly describe the sound channel (Pan), an auditory principle of a human ear is first briefly described. When an object in an environment emits a sound, both a left ear and a right ear of a person collect a sound wave signal. However, because the left ear and the right ear are located at different positions and in different orientations, there is a phase difference (namely, a time difference) between the sound wave signal collected by the left ear and the sound wave signal collected by the right ear. The brain determines a specific position of a sound source based on the phase difference, so that the brain can sense stereo. To bring a stereo auditory feeling to a user, a designer of an electronic device designs a sound emitting unit in the electronic device by using the auditory principle of the human ear. As mentioned above, a reason why a person perceives stereo is that a phase difference exists between two collected sound wave signals. Therefore, two sound emitting units may be disposed in the electronic device, and sound wave signals sent by the two sound emitting units have a phase difference. In this way, after the two sound wave signals that are sent by the electronic device and that have a phase difference are transmitted to the human ear, the brain may sense stereo effect based on the phase difference. Generally, the two sound emitting units are called dual sound channels, for example, a left sound channel and a right sound channel, where a sound wave signal emitted by the left sound channel and a sound wave signal emitted by the right sound channel have a phase difference, and the phase difference may be used to determine a sound source direction. Therefore, a sound output by such an electronic device (an electronic device designed by using the auditory principle of the human ear) can indicate a sound source direction, that is, after the user collects the output sound, the brain can identify the sound source direction. Therefore, that the sound channel of the first sound feedback is the same as the sound channel of the second sound feedback may be understood as that a sound source direction indicated by the first sound feedback is the same as a sound source direction indicated by the second sound feedback, for example, both are in the front. In this way, the user perceives, through the first sound feedback, that the sound comes from the front, and also perceives, through the second sound feedback, that the sound comes from the front. The duration of the first sound feedback is the same as the duration of the second sound feedback. For example, both of the duration of the first sound feedback and the duration of the second sound feedback are 1s, 2s, or 3s, and specific duration is not limited. In other words, when different identifiers in the first interface 110 are dragged to the mobile phone identifier 107, output sound feedbacks may be the same.

In some other embodiments, the first sound feedback may be different from the second sound feedback. For example, that the first sound feedback is different from the second sound feedback may include: At least one of the sound types, the loudness, the tones, the sound channels, and the duration are different.

For example, the sound type of the first sound feedback is different from the sound type of the second sound feedback. In some embodiments, when an identifier is dragged, a sound type of an output sound feedback is related to a device type of a device corresponding to the identifier. For example, if the device corresponding to the dragged identifier is of a type A (for example, a television), the sound type of the output sound feedback is a type 1, for example, "ding". If the device corresponding to the dragged identifier is of a type B (for example, a tablet computer), the sound type of the output sound feedback is a type 2, for example, "rub-a-dub". The device type identifies various types such as a television, a mobile phone, a sound box, and a watch. The sound types include "ding", "rub-a-dub (rub-a-dub)", "thud (thud)", "splash (splash)", a music segment, and the like. FIG. 2(c) is used as an example. The television and the notebook computer belong to different types of devices. Therefore, the sound type of the first sound feedback output when the television identifier 106 is dragged is different from the sound type of the second sound feedback output when the notebook computer identifier 108 is dragged. For example, the first sound feedback is "ding", and the second sound feedback is "rub-a-dub". In this way, different types of sound feedbacks are generated when different identifiers are dragged, and a difference is large. In an implementation, the mobile phone stores a correspondence between a sound type of a sound feedback and a device type. For example, a device type A corresponds to a sound type 1, and a device type B corresponds to a sound type 2. The mobile phone may determine, based on the correspondence, a sound type of a sound feedback corresponding to a dragged identifier. The correspondence may be stored in the electronic device by default, or may be set by the user. This is not limited in this application.

For example, the loudness of the first sound feedback is different from the loudness of the second sound feedback. In some embodiments, when an identifier is dragged, loudness of an output sound feedback is related to at least one of the following.
1. The loudness is related to a distance from the dragged identifier to the mobile phone identifier 107. For example, a larger distance indicates larger loudness. FIG. 2(c) is used as an example. The television identifier 106 is farther from the mobile phone identifier 107, and the notebook computer identifier 108 is closer to the mobile phone identifier 107. Therefore, the loudness of the first sound feedback corresponding to the television identifier 106 is greater than the loudness of the second sound feedback corresponding to the notebook computer identifier 108.
2. The loudness is related to a distance (the distance is an actual distance between two devices) between a device corresponding to the dragged identifier and the mobile phone. For example, a larger distance indicates larger loudness. FIG. 1 and FIG. 2(c) are used as an example. Assuming that in the real environment in FIG. 1, the television is farther from the mobile phone, and the notebook computer is closer to the mobile phone, the loudness of the first sound feedback corresponding to the television identifier 106 is greater than the loudness of the second sound feedback corresponding to the notebook computer identifier 108.
3. The loudness is related to a dragging speed and/or touch pressure of the dragging operation. For example, a larger dragging speed and/or larger touch pressure indicate/indicates larger loudness. FIG. 2(c) is used as an example. Assuming that a speed at which the television identifier 106 is dragged is higher, and a speed at which the notebook computer identifier 108 is dragged is lower, the loudness of the first sound feedback is greater than the loudness of the second sound feedback.
4. The loudness is related to at least one of a volume, a weight, and a material of a device corresponding to the dragged identifier. For example, a larger volume, a heavier weight, or higher material hardness indicates larger loudness. FIG. 2(c) is used as an example. Assuming that at least one of a volume, a weight, and material hardness of the television is greater than a volume, a weight, and material hardness of the notebook computer, the loudness of the first sound feedback corresponding to the television identifier 106 is greater than the loudness of the second sound feedback corresponding to the notebook computer identifier 108. It should be noted that, in a real world, when a person drags an object, a larger volume, a heavier weight, or a harder material of the dragged object indicates higher loudness of a sound. Therefore, in this manner, when the user drags an identifier, the output sound feedback can make the user feel like dragging a real object, and user experience is good. The material includes: glass, porcelain, metal, ceramic, plastic, and the like. For example, hardness of the glass or the porcelain is higher than hardness of the ceramic or the plastic.

For example, the tone of the first sound feedback is different from the tone of the second sound feedback. In some embodiments, when an identifier is dragged, a tone of an output sound feedback is related to at least one of the following.
1. The tone is related to a distance from the dragged identifier to the mobile phone identifier 107. For example, a larger distance indicates a higher tone. FIG. 2(c) is used as an example. The television identifier 106 is farther from the mobile phone identifier 107, and the notebook computer identifier 108 is closer to the mobile phone identifier 107. Therefore, the tone of the first sound feedback corresponding to the television identifier 106 is greater than the tone of the second sound feedback corresponding to the notebook computer identifier 108.
2. The tone is related to a distance (the distance is an actual distance between two devices) between a device corresponding to the dragged identifier and the mobile phone. For example, a larger distance indicates a higher tone. FIG. 1 and FIG. 2(c) are used as an example. Assuming that in the real environment in FIG. 1, the television is farther from the mobile phone, and the notebook computer is closer to the mobile phone, the tone of the first sound feedback corresponding to the television identifier 106 is greater than the tone of the second sound feedback corresponding to the notebook computer identifier 108.
3. The tone is related to a dragging speed and/or touch pressure of the dragging operation. For example, a larger dragging speed and/or larger touch pressure indicate/indicates a higher tone.
4. The tone is related to at least one of a volume, a weight, and a material of a device corresponding to the dragged identifier. For example, a larger volume, a heavier weight, or higher material hardness indicates a lower tone. In FIG. 2(c), assuming that at least one of a volume, a weight, and material hardness of the television is greater than a volume, a weight, and material hardness of the notebook computer, the tone of the first sound feedback corresponding to the television identifier 106 is higher than the tone of the second sound feedback corresponding to the notebook computer identifier 108. It should be noted that, in a real world, when a person drags an object, a larger volume, a heavier weight, or a harder material of the dragged object indicates a higher tone of a sound. On the contrary, a smaller volume, a lighter weight, or a softer material of the dragged object indicates a lower tone of a sound. Therefore, in this manner, when the user drags an identifier, the output sound feedback can make the user feel like dragging a real object, and user experience is good.

For example, the sound channel of the first sound feedback is different from the sound channel of the second sound feedback. In some embodiments, when an identifier is dragged, a sound channel of an output sound feedback is related to at least one of the following.
1. The sound channel is related to a direction of the dragged identifier relative to the mobile phone identifier 107. The direction of the dragged identifier relative to the mobile phone identifier 107 may be understood as a direction of a vector from the mobile phone identifier 107 to the dragged identifier, and for ease of description, is referred to as a direction of the dragged identifier for short. FIG. 2(c) is used as an example. The television identifier 106 is located at a right front side of the mobile phone identifier 107. Therefore, a sound source direction indicated by the first sound feedback corresponding to the television identifier 106 is the right front side. In this way, after collecting the first sound feedback, the user may feel that the sound comes from the right front side, and the direction is consistent with the direction in which the television identifier 106 is located, and experience is good.
   FIG. 2(c) is still used as an example. The notebook computer identifier 108 is located at a left rear side of the mobile phone identifier 107. Therefore, a sound source direction indicated by the second sound feedback corresponding to the notebook computer identifier 108 is the left rear side. In this way, after the user collects the second sound feedback, the brain may sense that the sound comes from the left rear side, and the direction is consistent with the direction in which the notebook computer identifier 108 is located.
2. The sound channel is related to a direction (the direction is an actual direction between two devices) of a device corresponding to the dragged identifier relative to the mobile phone. FIG. 1 and FIG. 2(c) are used as an example. In a real environment, the television is located at a left front side of the mobile phone. Therefore, a sound source direction indicated by the first sound feedback corresponding to the television identifier 106 is the left front side. The notebook computer is located on a right front side of the mobile phone. Therefore, a sound source direction indicated by the second sound feedback corresponding to the notebook computer identifier 108 is the right front side. In this manner, the user can sense a real direction of the device through the sound feedback, and experience is good.

For example, the duration of the first sound feedback is different from the duration of the second sound feedback. In some embodiments, when an identifier is dragged, duration of an output sound feedback is related to at least one of the following.
1. The duration is related to a distance from the dragged identifier to the mobile phone identifier 107. For example, a larger distance indicates longer duration. FIG. 2(c) is used as an example. The television identifier 106 is farther from the mobile phone identifier 107, and the notebook computer identifier 108 is closer to the mobile phone identifier 107. Therefore, the duration of the first sound feedback corresponding to the television identifier 106 is greater than the duration of the second sound feedback corresponding to the notebook computer identifier 108. For example, the first sound feedback is continuously output for 2s, and the second sound feedback is continuously output for 1s.
2. The duration is related to a distance between a device corresponding to the dragged identifier and the mobile phone. For example, a larger distance indicates longer duration. FIG. 1 and FIG. 2(c) are used as an example. Assuming that in the real environment in FIG. 1, the television is farther from the mobile phone, and the notebook computer is closer to the mobile phone, the duration of the first sound feedback corresponding to the television identifier 106 is greater than the duration of the second sound feedback corresponding to the notebook computer identifier 108. In some embodiments, only at least one of the sound type, the loudness, the tone, the sound channel, and the duration of the first sound feedback is required to be different from the sound type, the loudness, the tone, the sound channel, and the duration of the second sound feedback. For example, the sound type of the first sound feedback and the sound type of the second sound feedback are the same, and both are "ding", while the loudness, the tone, the sound channel, and the duration of the first sound feedback are all different from those of the second sound feedback. Alternatively, the sound type of the first sound feedback and the sound type of the second sound feedback are the same, and both are "ding", and the duration of the first sound feedback is the same as the duration of the second sound feedback, but the loudness, the tone, and the sound channel of the first sound feedback are all different from those of the second sound feedback.

In some embodiments, in a process in which an identifier is dragged, an output sound feedback may dynamically change. The first sound feedback is used as an example. In a process of outputting the first sound feedback, at least one of the loudness or the tone of the first sound feedback may dynamically change. For example, the loudness and/or the tone of the first sound feedback (for example, "ding") decrease/decreases as the distance between the television identifier 106 and the mobile phone identifier 107 decreases, or decrease/decreases as the dragging speed of the first dragging operation decreases, or decrease/decreases as the touch pressure of the first dragging operation decreases.

In some other embodiments, in a process in which an identifier is dragged, an output sound feedback may include more than one type of sound. The first dragging operation described above is used as an example. The first dragging operation may be that the television identifier 106 approaches the mobile phone identifier 107 and is in contact or collides with the mobile phone identifier 107. Therefore, in some embodiments, in response to the first dragging operation, the mobile phone outputs a first sound feedback that includes two types of sounds, and the two types of sounds are referred to as a third sound feedback and a fourth sound feedback. The third sound feedback is generated from the television identifier 106 starts to move to a moment before the television identifier 106 is in contact with the mobile phone identifier 107, and the fourth sound feedback is generated when the television identifier 106 is in contact with the mobile phone identifier 107. For example, from a moment when the television identifier 106 starts to move to a moment before the television identifier 106 is in contact with the mobile phone identifier 107, a "ding" sound is generated, and when the television identifier 106 is in contact with the mobile phone identifier 107, a "clank" collision sound is generated. In this manner, one type of sound is output in a process of moving an identifier to the mobile phone identifier 107, and another type of sound (for example, a collision sound) is output when the identifier collides with the mobile phone identifier 107, so that interaction experience is better. Herein, that the first sound feedback generated when the television identifier 106 is dragged includes two types of sounds is used as an example. It may be understood that the second sound feedback generated when the notebook computer 108 is dragged may also include two types of sounds, and details are not described again. In an implementation, the mobile phone may detect in real time a coordinate position of the dragged identifier on the display, and when a distance between the coordinate position and a coordinate position of the mobile phone identifier 107 is greater than a preset distance, the third sound feedback is output; otherwise, the fourth sound feedback is output. A specific value of the preset distance is not limited in this application.

The following describes related devices in this application.

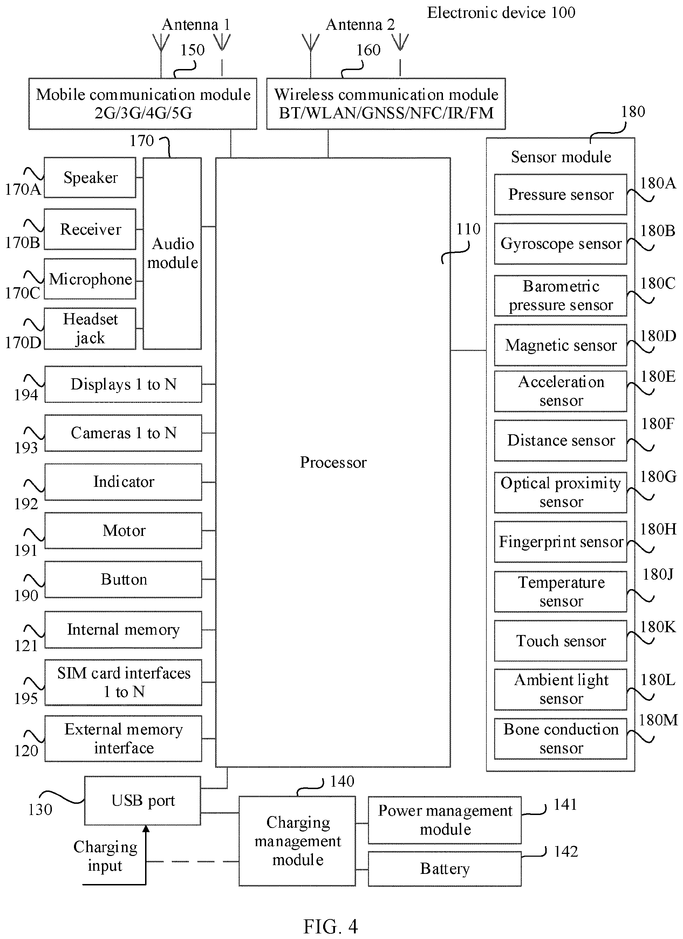

FIG. 4 is a schematic diagram of a structure of an electronic device. As shown in FIG. 4, the electronic device may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the electronic device. The controller may generate an operation control signal based on instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB port 130 is a port that conforms to a USB standard specification, and may be specifically a mini USB port, a micro USB port, a USB type-C port, or the like. The USB port 130 may be configured to connect to a charger to charge the electronic device, or may be configured to transmit data between the electronic device and a peripheral device. The charging management module 140 is configured to receive charging input from a charger. The power management module 141 is configured to connect the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna of the electronic device may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that includes wireless communication such as 2G/3G/4G/5G and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like and that is applied to the electronic device. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a mini-LED, a micro-LED, a micro-OLED, a quantum dot light emitting diode (quantum dot light emitting diode, QLED), or the like.

In some embodiments, the electronic device may include one or N displays 194, where N is a positive integer greater than 1.

The electronic device 100 may implement an image shooting function through the ISP, the camera 193, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through a lens, and is projected to the photosensitive element. The photosensitive element may be a charge coupled device (charge coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device may include one or N cameras 193, where N is a positive integer greater than 1.

The internal memory 121 may be configured to store computer-executable program code. The executable program code includes instructions. The processor 110 runs the instructions stored in the internal memory 121, to perform various function applications and data processing of the electronic device. The internal memory 121 may include a program storage area and a data storage area. The program storage area may store an operating system, software code of at least one application (for example, iQIYI or WeChat), and the like. The data storage area may store data (for example, an image or a video) generated in a process of using the electronic device, and the like. In addition, the internal memory 121 may include a high-speed random access memory, or may include a non-volatile memory, for example, at least one magnetic disk storage device, a flash memory, or a universal flash storage (universal flash storage, UFS).

The external memory interface 120 may be configured to be connected to an external storage card, for example, a micro SD card, to extend a storage capability of the electronic device. The external storage card communicates with the processor 110 through the external memory interface 120, to implement a data storage function. For example, files such as pictures or videos are stored in the external storage card.

The electronic device may implement an audio function by using the audio module 170, the speaker 170A, the receiver 170B, the microphone 170C, the headset jack 170D, the application processor, and the like, for example, music playing and recording.

The pressure sensor 180A is configured to sense a pressure signal, and can convert the pressure signal into an electrical signal. In some embodiments, the pressure sensor 180A may be disposed in the display 194. The gyroscope sensor 180B may be configured to determine a motion posture of the electronic device. In some embodiments, an angular velocity of the electronic device around three axes (namely, axes x, y, and z) may be determined by using the gyroscope sensor 180B. The gyroscope sensor 180B may be configured to implement image stabilization during image shooting. The barometric pressure sensor 180C is configured to measure barometric pressure. In some embodiments, the electronic device calculates an altitude based on a value of the barometric pressure measured by the barometric pressure sensor 180C, to assist in positioning and navigation. The magnetic sensor 180D includes a Hall sensor. The electronic device may detect opening and closing of a leather case by using the magnetic sensor 180D. In some embodiments, when the electronic device is a flip phone, the electronic device may detect opening and closing of a flip cover by using the magnetic sensor 180D. Further, a feature such as automatic unlocking of the flip cover is set based on a detected opening or closing state of the leather case or a detected opening or closing state of the flip cover. The acceleration sensor 180E may detect magnitudes of accelerations of the electronic device in all directions (usually on three axes). A magnitude and direction of gravity can be detected when the electronic device is stationary. The acceleration sensor 180E may be further configured to identify a posture of the electronic device, and is used in an application such as switching between a landscape mode and a portrait mode or a pedometer. The distance sensor 180F is configured to measure a distance. The electronic device may measure the distance through infrared or laser. In some embodiments, in an image shooting scenario, the electronic device may measure the distance by using the distance sensor 180F, to implement quick focusing. The optical proximity sensor 180G may include, for example, a light emitting diode (LED) and an optical detector, for example, a photodiode. The light emitting diode may be an infrared light emitting diode. The electronic device emits infrared light by using the light-emitting diode. The electronic device detects infrared reflected light from a nearby object by using the photodiode. When detecting sufficient reflected light, the electronic device may determine that there is an object near the electronic device. When detecting insufficient reflected light, the electronic device may determine that there is no object near the electronic device. The electronic device may detect, through the optical proximity sensor 180G, that the user holds the electronic device close to an ear for a call, to automatically turn off a screen for power saving. The optical proximity sensor 180G may also be used in a leather case mode or a pocket mode to automatically perform screen unlocking or locking.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device is in a pocket, to avoid an unintentional touch. The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy by using the temperature detected by the temperature sensor 180J. For example, when the temperature reported by the temperature sensor 180J exceeds a threshold, the electronic device degrades performance of a processor near the temperature sensor 180J, to reduce power consumption and implement thermal protection. In some other embodiments, when the temperature is lower than another threshold, the electronic device heats the battery 142, to avoid an abnormal shutdown of the electronic device caused by a low temperature. In some other embodiments, when the temperature is lower than still another threshold, the electronic device boosts an output voltage of the battery 142, to avoid an abnormal shutdown caused by a low temperature.

The touch sensor 180K is also referred to as a touch panel. The touch sensor 180K may be disposed in the display 194, and a touchscreen, also referred to as a "touchscreen", is formed by the touch sensor 180K and the display 194. The touch sensor 180K is configured to detect a touch operation performed on or near the touch sensor. The touch sensor may transfer the detected touch operation to the application processor to determine a type of a touch event. Visual output related to the touch operation may be provided through the display 194. In some other embodiments, the touch sensor 180K may alternatively be disposed on a surface of the electronic device, and is located at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may further be in contact with a body pulse to receive a blood pressure beating signal.

The button 190 includes a power button, a volume button, and the like. The button 190 may be a mechanical button, or may be a touch button. The electronic device may receive button input, and generate button signal input related to user settings and function control of the electronic device. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effect. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the electronic device.

It may be understood that the components shown in FIG. 4 do not constitute a specific limitation on the electronic device. The electronic device in this embodiment of the present invention may include more or fewer components than those in FIG. 4. In addition, a combination/connection relationship between the components in FIG. 4 may be adjusted and modified.

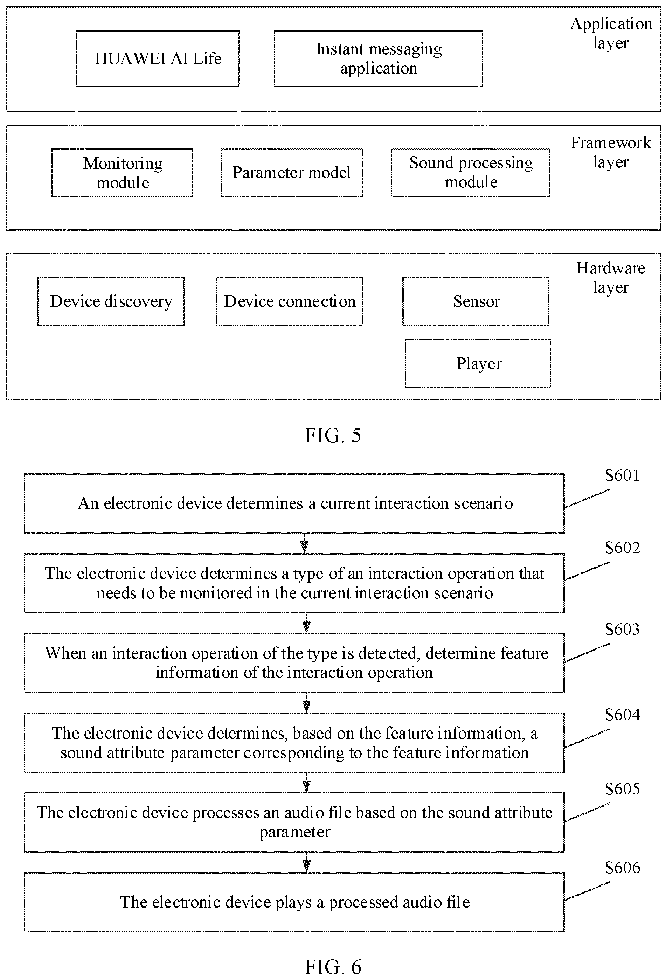

FIG. 5 is a block diagram of a software structure of an electronic device according to an embodiment of this application.

The software structure of the electronic device may be a layered architecture. For example, software is divided into several layers, and each layer has a clear role and task. The layers communicate with each other through a software interface. It is assumed that the electronic device is an Android system, and the system may include an application layer (application layer for short), an application framework layer (framework layer for short) (framework, FWK), a hardware layer, and the like.

The application layer may include a series of application packages, for example, HUAWEI AI Life, a camera, and an instant messaging application.

The framework layer includes a monitoring module, a sound processing module, and a parameter model. The monitoring module may be configured to monitor a current interaction scenario, for example, the current interaction scenario is a super terminal scenario, a content loading scenario, or a keyboard input scenario. The monitoring module may be further configured to: monitor an interaction operation, determine a sound attribute parameter based on the interaction operation, and the like. A detailed function of the monitoring module is described below. The sound processing module may be configured to perform processing on a to-be-output sound, for example, processing such as increasing or decreasing loudness or a tone, which is specifically described in the following. The parameter model may be used to store various mapping relationships (described later).

The hardware layer includes device discovery, configured to discover a surrounding device; and further includes a device connection, configured to establish a connection to the surrounding device. Certainly, the hardware layer may further include another component, for example, a sensor, configured to collect a touch operation performed by a user on a touchscreen of the user; and further include a player, configured to play a sound feedback.

For example, FIG. 6 is a schematic flowchart of a touch feedback method according to an embodiment of this application. The method may be applied to the electronic device in the scenario shown in FIG. 1, for example, the mobile phone. A hardware structure of the electronic device is shown in FIG. 4, and a software structure is shown in FIG. 5. As shown in FIG. 6, the process includes the following steps.

S601: The electronic device determines a current interaction scenario.

There are a plurality of interaction scenarios, such as a super terminal scenario (as described above), a content loading scenario, and a keyboard input scenario. For example, the super terminal scenario is used as an example. When detecting that the first interface 110 in FIG. 2(c) is opened, the electronic device determines that the current interaction scenario is the super terminal scenario. For another example, when determining that content (for example, a web page) is being loaded in a current display interface, the electronic device determines that the current interaction scenario is the content loading scenario. For another example, when detecting that a user taps a key in a keyboard (a physical keyboard or a soft keyboard), the electronic device determines that the current interaction scenario is the keyboard input scenario.

S602: The electronic device determines a type of an interaction operation that needs to be monitored in the current interaction scenario.

For example, the type of the interaction operation includes tapping, double-tapping, dragging, touching and holding, and the like. Generally, data such as an operation time point (including a start time point and an end time point), an operation position (including a start position and an end position), and touch pressure of an interaction operation may be collected by using a sensor (for example, a touch sensor). The type of the interaction operation may be determined by using the data collected by the sensor. For example, whether the interaction operation is a tapping operation or a touching and holding operation may be determined by using a time difference between the start time point and the end time point, and/or whether the interaction operation is a sliding operation or a tapping operation may be determined by using a distance between the start position and the end position.

In some embodiments, different types of interaction operations need to be monitored in different interaction scenarios. For example, in the super terminal scenario (that is, when the first interface 110 in FIG. 2(c) is displayed), a dragging operation needs to be monitored. The dragging operation may be understood as an operation of touching and holding and sliding, for example, an operation of touching and holding and then dragging the television identifier 106. In the keyboard input scenario, a pressing operation needs to be monitored, and the like.

S603: When an interaction operation of the type is detected, determine feature information of the interaction operation.

The following uses the super terminal scenario as an example. When a dragging operation is detected, feature information of the dragging operation is determined. For example, the feature information includes: a dragged identifier, a target identifier, a distance and/or a direction between the dragged identifier and the target identifier, a dragging speed, touch pressure, an attribute (a device type, a volume, a weight, a material, and the like) of a device corresponding to the dragged identifier, a distance and/or a direction between the device corresponding to the dragged identifier and a local device, and the like. For example, the dragged identifier may be the television identifier 106, the notebook computer identifier 108, or the like in FIG. 2(c), and the target identifier may be the mobile phone identifier 107.

S604: The electronic device determines, based on the feature information of the interaction operation, a sound attribute parameter corresponding to the feature information.

The sound attribute parameter includes at least one of a sound type, loudness, a tone, a sound channel (that is, a phase difference), and duration.

In an implementation, the electronic device determines, based on the feature information of the interaction operation and a preset mapping relationship, the sound attribute parameter corresponding to the feature information, where the mapping relationship includes a mapping relationship between the feature information of the interaction operation and the sound attribute parameter.

In an example, it is assumed that the feature information that is of the interaction operation and that is determined in S603 includes at least one of the following: the distance between the dragged identifier and the target identifier, a dragging speed of the dragging operation, touch pressure of the dragging operation, the volume, the weight, and the material of the device corresponding to the dragged identifier, and the distance between the device corresponding to the dragged identifier and the local device. In this case, loudness of a sound feedback may be determined based on the feature information and the preset mapping relationship. For example, the loudness of the sound feedback is determined based on the distance between the dragged identifier and the target identifier and the preset mapping relationship. For example, the mapping relationship includes the following Table 1.

**Table 1: Mapping relationship between feature information of an interaction operation and loudness**

| Feature information of an interaction operation | Loudness value |
|---|---|
| A distance between a dragged identifier and a target identifier is [L1, L2] | 0 |
| A distance between a dragged identifier and a target identifier is less than L1 | -20 decibels |
| A distance between a dragged identifier and a target identifier is greater than L2 | +20 decibels |

It should be noted that numbers (for example, 0 decibels, 20 decibels, and -20 decibels) in this specification are all examples, and a specific value is not limited in this application. For example, when the distance between the dragged identifier and the target identifier is less than L1, it is determined that the loudness value is -20 decibels. In this case, loudness of a to-be-played audio file (an initial audio file in the following) is reduced by 20 decibels, and an audio file (namely, the sound feedback) obtained after the loudness is reduced is played. The audio file may be a sound such as "tinkle" or "ding", or may be a song segment, an accompaniment segment, or another sound. This is not limited in this embodiment of this application.

In another example, it is assumed that the feature information that is of the interaction operation and that is determined in S603 includes at least one of the following: the distance between the dragged identifier and the target identifier, a dragging speed of the dragging operation, touch pressure of the dragging operation, the volume, the weight, and the material of the device corresponding to the dragged identifier, and the distance between the device corresponding to the dragged identifier and the local device. In this case, a tone of a sound feedback may be determined based on the feature information and the preset mapping relationship. For example, the tone of the sound feedback is determined based on the material of the device corresponding to the dragged identifier and the preset mapping relationship. For example, the mapping relationship may include the following Table 2.

**Table 2: Mapping relationship between feature information of an interaction operation and a tone**

| Feature information of an interaction operation | Tone |
|---|---|
| A material of a device corresponding to a dragged identifier is metal | 0 hertz |
| A material of a device corresponding to a dragged identifier is plastic | -20 hertz |
| A material of a device corresponding to a dragged identifier is glass | +20 hertz |

For example, the material of the device corresponding to the dragged object is glass, and it may be determined, based on the foregoing mapping relationship, that a tone value is -20 hertz. Therefore, a tone of an audio file needs to be reduced by 20 hertz, and an audio file (namely, the sound feedback) obtained after the tone is reduced needs to be played. For example, there are a plurality of manners of adjusting the tone of the audio file, for example, a phase vocoder method. Details are not described in this embodiment of this application. In this manner, the electronic device may determine a corresponding tone based on the material of the device corresponding to the dragged identifier by querying the mapping relationship, to adjust the tone of the audio file, and play the audio file obtained after the tone adjustment, to generate the sound feedback.

In another example, it is assumed that the feature information that is of the interaction operation and that is determined in S603 includes at least one of a direction in which the dragged identifier is located relative to the target identifier and a direction in which the device corresponding to the dragged identifier is located relative to the local device. In this case, a sound channel of a sound feedback may be determined based on the feature information and the preset mapping relationship. For example, the sound channel of the sound feedback is determined based on the direction in which the dragged identifier is located relative to the target identifier and the preset mapping relationship. For example, the mapping relationship may include the following Table 3.

**Table 3: Mapping relationship between feature information of an interaction operation and a sound channel**

| Feature information of an interaction operation | Phase difference |
|---|---|
| A direction of a dragged identifier is [A1, A2] | 0 |
| A direction of a dragged identifier is less than A1 | -2s |
| A direction of a dragged identifier is greater than A2 | +2s |

A1 and A2 are angle values. For example, when the direction of the dragged identifier is less than A1, it is determined that the phase difference (or time difference) is -2s, and then a phase difference between a left sound channel signal and a right sound channel signal corresponding to the to-be-played audio file is reduced by 2s. For example, a head-response transfer function (Head-Response Transfer Function, HRTF) may be used to adjust the phase difference between the left and right sound channel signals, and details are not described in this embodiment of this application.

In another example, it is assumed that the feature information that is of the interaction operation and that is determined in S603 includes the type of the device corresponding to the dragged identifier, and a sound type of a sound feedback may be determined based on the feature information and the preset mapping relationship. For example, the mapping relationship is as the following Table 4.

**Table 4: Mapping relationship between feature information of an interaction operation and a sound type**

| Feature information of an interaction operation | Sound type |
|---|---|
| A device type corresponding to a dragged identifier is a television | Rub-a-dub |
| A device type corresponding to a dragged identifier is a sound box | Ding |

That is, after determining the type of the device corresponding to the dragged identifier, the electronic device may determine a corresponding sound type by using Table 1. In some embodiments, the electronic device determines the type of the device corresponding to the dragged identifier in a plurality of manners, for example, sending query information to the device corresponding to the dragged identifier, to query the device type of the device.

It should be noted that, in the foregoing embodiment, that the sound attribute parameter is determined by using the mapping relationship is used as an example. It may be understood that the sound attribute parameter may be further determined in another manner, for example, the sound attribute parameter is determined by using a function.

The loudness is used as an example. The electronic device stores a first function, where input of the function is at least one of the distance between the dragged identifier and the target identifier, the dragging speed of the dragging operation, the touch pressure of the dragging operation, the volume, the weight, and the material of the device corresponding to the dragged identifier, and the distance between the device corresponding to the dragged identifier and the local device, and output of the function is the loudness. For example, the first function is, for example, a linear function y=-k1x+b1, where x1 is at least one of the distance between the dragging identifier and the target identifier, the dragging speed of the dragging operation, the touch pressure of the dragging operation, the volume, the weight, and the material of the device corresponding to the dragged identifier, and the distance between the device corresponding to the dragged identifier and the local device, y is the loudness, and k1 and b1 are known values. Values of k1 and b1 may be set by default, or may be set by a user. This is not limited in this application.

The tone is used as an example. The electronic device stores a second function, where input of the function is at least one of the distance between the dragged identifier and the target identifier, the dragging speed of the dragging operation, the touch pressure of the dragging operation, the volume, the weight, and the material of the device corresponding to the dragged identifier, and the distance between the device corresponding to the dragged identifier and the local device, and output of the function is the tone. For example, the second function is, for example, a linear function y=-k2x+b2, where x2 is at least one of the distance between the dragging identifier and the target identifier, the dragging speed of the dragging operation, the touch pressure of the dragging operation, the volume, the weight, and the material of the device corresponding to the dragged identifier, and the distance between the device corresponding to the dragged identifier and the local device, y is the loudness, and k2 and b2 are known values. Values of k2 and b2 may be set by default, or may be set by a user. This is not limited in this application.

In conclusion, the electronic device may obtain a corresponding sound attribute parameter based on the feature information of the interaction operation by querying the foregoing mapping relationship or performing calculation by using a function, to adjust a sound attribute of an audio file, and play an adjusted audio file, to generate a sound feedback.

S605: The electronic device processes the audio file based on the sound attribute parameter.

As described above, the sound attribute parameter includes the sound type, the loudness, the tone, the phase difference, the duration, and the like. For example, the sound attribute parameter includes the sound type and the loudness. The electronic device may search for an audio file corresponding to the sound type from a plurality of audio files, then adjust loudness of the audio file, and then play an audio file obtained after loudness adjustment. The electronic device may store a plurality of audio files, corresponding to various types of sounds, for example, "ding", "rub-a-dub", or a music segment. The audio file may be by default in the electronic device or set by a user. This is not limited in this embodiment of this application.

S606: The electronic device plays a processed audio file.

It may be understood that, if the interaction scenario determined in S601 is the super terminal scenario, the following step may be further included: in response to the interaction operation, establishing a connection to the device corresponding to the dragged identifier.

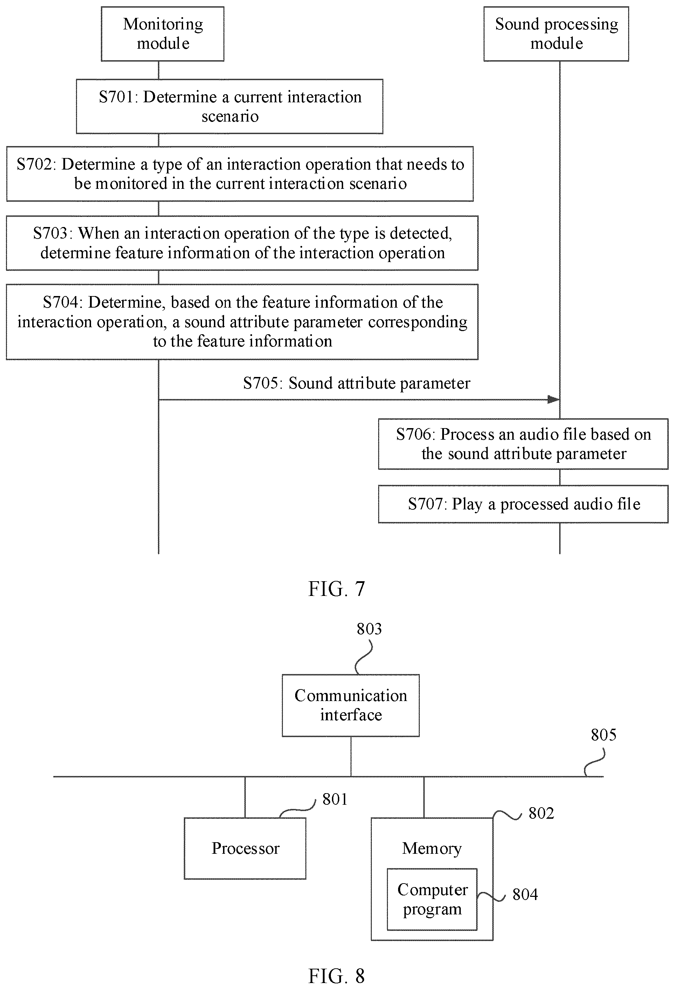

For example, FIG. 7 is another schematic flowchart of a touch feedback method according to an embodiment of this application. The flowchart may be understood as a diagram of information exchange between different software modules in FIG. 5, for example, a diagram of information exchange between the monitoring module and the sound processing module. FIG. 7 may be understood as refinement of FIG. 6. For example, in FIG. 7, an execution body of each step in FIG. 6 is refined. As shown in FIG. 7, the process includes the following steps.

S701: A monitoring module determines a current interaction scenario.

For descriptions of the interaction scenario, refer to S601 in FIG. 6.

For example, the monitoring module may monitor a display interface on a display (not shown in FIG. 5) at a hardware layer. When it is detected that the display interface is the first interface 110 shown in FIG. 2(a) to FIG. 2(d), it is determined that the current interaction scenario is a super terminal scenario. When it is detected that the display interface is a content loading interface, it is determined that the current interaction scenario is a content loading scenario.

S702: The monitoring module determines a type of an interaction operation that needs to be monitored in the current interaction scenario.

An implementation principle of S702 is the same as an implementation principle of S602, and details are not described again. For example, in different interaction scenarios, for which types of interaction operations need to be monitored, refer to the descriptions of S602.

S703: When an interaction operation of the type is detected, the monitoring module determines feature information of the interaction operation.

An implementation principle of a process of determining the feature information is the same as an implementation principle of S603, and details are not described herein again.

S704: The monitoring module determines, based on the feature information of the interaction operation, a sound attribute parameter corresponding to the feature information.

An implementation principle of S704 is the same as an implementation principle of S604. For example, the listening module determines, based on the feature information and a preset mapping relationship, the sound attribute parameter corresponding to the feature information. Therefore, a process of determining the sound attribute parameter is not described herein again.

For example, as shown in FIG. 5, the framework layer includes the parameter model, and the parameter model may store the mapping relationship. Therefore, in S704, the monitoring module may query the corresponding sound attribute parameter in the parameter model based on the feature information.

S705: The monitoring module sends the determined sound attribute parameter to a sound processing module.

As described above, the sound attribute parameter includes a sound type, loudness, a tone, a phase difference, duration, and the like. The monitoring module determines the sound attribute parameter and sends it to the sound processing module.

S706: The sound processing module processes an audio file based on the determined sound attribute parameter.

For a process of processing the audio file based on the sound attribute parameter, refer to the descriptions of S605. Details are not described herein again.

S707: The sound processing module plays a processed audio file.

For example, as shown in FIG. 5, the sound processing module may invoke a player at the hardware layer to play the processed audio file.

In some embodiments, after detecting the dragging operation, the monitoring module in the electronic device establishes, in response to the dragging operation, a connection to a device corresponding to the dragged identifier. For example, as shown in FIG. 5, the listening module invokes a device connection module at the hardware layer to connect to the device corresponding to the dragged identifier.

In the foregoing embodiment, the super terminal scenario is mainly used as an example for description, and a keyboard input scenario is used as an example for description in the following. As described above, in the keyboard input scenario, a type of an interaction operation that needs to be monitored is a pressing operation. When the pressing operation is detected, feature information of the pressing operation is determined, for example, pressing duration, a pressing force, a pressing speed, and a pressing depth. In this scenario, a mapping relationship between the feature information of the interaction operation and a sound attribute parameter includes a mapping relationship between loudness or a tone and at least one of the pressing duration, the pressing force, the pressing speed, and the pressing depth. For example, the mapping relationship includes the following Table 5.

**Table 5: Mapping relationship between feature information of an interaction operation and loudness / a tone**

| Feature information of an interaction operation | Loudness/Tone |
|---|---|
| Pressing duration, a pressing speed, a pressing depth, and/or a pressing force are/is in [L1, L2] | 0 |
| Pressing duration, a pressing speed, a pressing depth, and/or a pressing force are/is less than L1 | -20 |
| Pressing duration, a pressing speed, a pressing depth, and/or a pressing | +20 |
| force are/is greater than L2 | |

For example, when the pressing depth of the interaction operation is less than L 1, a corresponding loudness value is -20. In this case, loudness of the audio file is reduced by 20 decibels, and an audio file (namely, a sound feedback) obtained after the loudness is reduced is played. That is, for interaction operations with different pressing depths, loudness and/or tones of generated sound feedbacks are different. Similarly, when at least one of the pressing speed, the pressing force, and the pressing duration is different, loudness and/or tones of the sound feedbacks are different. The following uses a content loading scenario as an example. In the content loading scenario, an interaction operation type that needs to be monitored includes an operation used to load content, for example, an operation used to open a web page. When the operation is detected, feature information of the operation is determined, for example, a loading speed and/or loading progress. In this scenario, the mapping relationship between the feature information of the interaction operation and the sound attribute parameter includes a mapping relationship between the loading speed and/or the loading progress and the loudness or the tone. For example, the mapping relationship includes the following Table 6.

**Table 6: Mapping relationship between feature information of an interaction operation and loudness / a tone**

| Feature information of an interaction operation | Loudness/Tone |
|---|---|
| A loading speed and/or loading progress is [L1, L2] | 0 |
| A loading speed and/or loading progress is less than L1 | -20 |
| A loading speed and/or loading progress is greater than L2 | +20 |

For example, when the loading progress is less than L1, it is determined that a loudness value is - 20. In this case, loudness of an audio file is reduced by 20 decibels, and an audio file (namely, a sound feedback) obtained after the loudness is reduced is played. That is, when loading progress is different, loudness and/or tones of generated sound feedbacks are different. For example, as the loading progress increases, the loudness and/or the tone are/is higher. The user may determine the loading progress based on the loudness and/or tone of the sound feedback. Similarly, when loading speeds are different, loudness and/or tones of generated sound feedbacks are different. For example, as the loading speed increases, the loudness and/or the tone are/is higher, and the user may determine the loading speed based on the loudness and/or the tone of the sound feedback.

FIG. 8 shows an electronic device 800 according to this application. The electronic device 800 may be the foregoing mobile phone. As shown in FIG. 8, the electronic device 800 may include one or more processors 801, one or more memories 802, a communication interface 803, and one or more computer programs 804. The foregoing components may be connected by using one or more communication buses 805. The one or more computer programs 804 are stored in the memory 802 and are configured to be executed by the one or more processors 801. The one or more computer programs 804 include instructions, and the instructions may be used to perform related steps (for example, related steps in FIG. 6 or FIG. 7) of the electronic device in the foregoing corresponding embodiments. The communication interface 803 is configured to implement communication with another device. For example, the communication interface may be a transceiver.

In embodiments provided in this application, the method provided in embodiments of this application is described from the perspective in which the electronic device (for example, the mobile phone) is used as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

According to context, the term "when..." or "after..." used in the foregoing embodiments may be interpreted as a meaning of "if...", "after...", "in response to determining...", or "in response to detecting...". Similarly, according to the context, the phrase "when it is determined that" or "if (a stated condition or event) is detected" may be interpreted as a meaning of "if it is determined that", "in response to determining", "when (a stated condition or event) is detected", or "in response to detecting (a stated condition or event)". In addition, in the foregoing embodiments, relationship terms such as first and second are used to distinguish one entity from another entity, but do not limit any actual relationship and sequence between these entities.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the processes or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk (SSD)), or the like. When no conflict occurs, the solutions in the foregoing embodiments may be combined for use.

## Claims

1. A touch feedback method, applied to a first electronic device, wherein the method comprises:
displaying a first interface (110) in response to a first operation, wherein the first interface (110) comprises a first identifier of the first electronic device, a second identifier of a second electronic device, and a third identifier of a third electronic device, and the second electronic device and the third electronic device are surrounding devices that are found by the first electronic device through scanning;
in response to a first dragging operation, outputting a first sound feedback, and establishing a connection to the second electronic device, wherein the first dragging operation is used to drag the second identifier so that the second electronic device establishes the connection to the first electronic device; and
in response to a second dragging operation, outputting a second sound feedback, and establishing a connection to the third electronic device, wherein the second dragging operation is used to drag the third identifier so that the third electronic device establishes the connection to the first electronic device, wherein
the second sound feedback is different from the first sound feedback when at least one of a device type, a volume, a weight, and a material of the third electronic device is different from a device type, a volume, a weight, and a material of the second electronic device.

2. The method according to claim 1, wherein that the second sound feedback is different from the first sound feedback comprises:
at least one of a sound type, loudness, a tone, a sound channel, and duration of the second sound feedback is different from a sound type, loudness, a tone, a sound channel, and duration of the first sound feedback.

3. The method according to claim 1 or 2, wherein that the second sound feedback is different from the first sound feedback comprises:
when at least one of the following conditions is met, the second sound feedback is different from the first sound feedback, wherein the conditions comprise:
a distance from the second electronic device to the first electronic device is different from a distance from the third electronic device to the first electronic device;
the second electronic device and the third electronic device are located in different directions of the first electronic device;
a distance from the second identifier to the first identifier is different from a distance from the third identifier to the first identifier;
the second identifier and the third identifier are located in different directions of the first identifier;
a dragging speed of the first dragging operation is different from a dragging speed of the second dragging operation; and
touch pressure of the first dragging operation on a touchscreen is different from touch pressure of the second dragging operation on the touchscreen.

4. The method according to any one of claims 1 to 3, wherein that the second sound feedback is different from the first sound feedback comprises:
when at least one of the following conditions is met, the loudness and/or the tone of the first sound feedback are/is greater than the loudness and/or the tone of the second sound feedback, wherein the conditions comprise:
the distance from the second identifier to the first identifier is greater than the distance from the third identifier to the first identifier;
the distance from the second electronic device to the first electronic device is greater than the distance from the third electronic device to the first electronic device;
the dragging speed of the first dragging operation is greater than the dragging speed of the second dragging operation;
the touch pressure of the first dragging operation is greater than the touch pressure of the second dragging operation;
the volume of the second electronic device is greater than the volume of the third electronic device;
the weight of the second electronic device is greater than the weight of the third electronic device; and
material hardness of the second electronic device is greater than material hardness of the third electronic device.

5. The method according to any one of claims 1 to 3, wherein that the second sound feedback is different from the first sound feedback comprises:
when at least one of the following conditions is met, the duration of the first sound feedback is greater than the duration of the second sound feedback, wherein the conditions comprise:
the distance from the second identifier to the first identifier is greater than the distance from the third identifier to the first identifier; and
the distance from the second electronic device to the first electronic device is greater than the distance from the third electronic device to the first electronic device.

6. The method according to any one of claims 1 to 3, wherein that the second sound feedback is different from the first sound feedback comprises:
when the following condition is met, a sound source direction indicated by the first sound feedback is a first direction, wherein the condition comprises: the second identifier is located in the first direction of the first identifier, and/or the second electronic device is located in the first direction of the first electronic device; and
when the following condition is met, a sound source direction indicated by the second sound feedback is a second direction, wherein the condition comprises: the third identifier is located in the second direction of the first identifier, and/or the third electronic device is located in the second direction of the first electronic device.

7. The method according to claim 6, wherein
that a sound source direction indicated by the first sound feedback is a first direction comprises:
the first sound feedback comprises first left sound channel information and first right sound channel information, a phase difference between the first left sound channel information and the first right sound channel information is a first phase difference, and the first phase difference is used to determine that the sound source direction is the first direction; and
that a sound source direction indicated by the second sound feedback is a second direction comprises:
the second sound feedback comprises second left sound channel information and second right sound channel information, a phase difference between the second left sound channel information and the second right sound channel information is a second phase difference, and the second phase difference is used to determine that the sound source direction is the second direction.

8. The method according to any one of claims 1 to 7, wherein the method further comprises:
a first distance from the second identifier to the first identifier in the first interface (110) is positively correlated with a second distance from the second electronic device to the first electronic device; and/or
the first direction of the first identifier in which the second identifier is located in the first interface (110) is consistent with the second direction of the first electronic device in which the second electronic device is located; and/or
a third distance from the third identifier to the first identifier in the first interface (110) is positively correlated with a fourth distance from the third electronic device to the first electronic device; and/or
a third direction of the first identifier in which the third identifier is located in the first interface (110) is consistent with a fourth direction of the first electronic device in which the third electronic device is located.

9. The method according to any one of claims 1 to 8, wherein
the first dragging operation is used to drag the second identifier to move to a position of the first identifier and not be in contact with the first identifier, or the first dragging operation is used to drag the second identifier to move to a position of the first identifier and be in contact with the first identifier; and/or
the second dragging operation is used to drag the third identifier to move to the position of the first identifier and not be in contact with the first identifier, or the second dragging operation is used to drag the third identifier to move to the position of the first identifier and be in contact with the first identifier.

10. The method according to claim 9, wherein the method further comprises:
when the first dragging operation is used to drag the second identifier to move to the position of the first identifier and be in contact with the first identifier, the first sound feedback comprises a third sound feedback and a fourth sound feedback, wherein the third sound feedback is a corresponding sound feedback from a moment when the second identifier starts to move to a moment before the second identifier is in contact with the first identifier, and the fourth sound feedback is a corresponding sound feedback at a moment when the second identifier is in contact with the first identifier; and/or
when the second dragging operation is used to drag the third identifier to move to the position of the first identifier and be in contact with the first identifier, the second sound feedback comprises a fifth sound feedback and a sixth sound feedback, wherein the fifth sound feedback is a corresponding sound feedback from a moment when the third identifier starts to move to a moment before the third identifier is in contact with the first identifier, and the sixth sound feedback is a corresponding sound feedback at a moment when the third identifier is in contact with the first identifier.

11. The method according to claim 10, wherein
a sound type of the third sound feedback is different from a sound type of the fourth sound feedback; and/or
a sound type of the fifth sound feedback is different from a sound type of the sixth sound feedback.

12. The method according to any one of claims 1 to 11, wherein
when the first dragging operation is used to drag the second identifier to move to the position of the first identifier, in a process of outputting the first sound feedback, the loudness and/or the tone of the first sound feedback decrease/decreases as at least one of the following: the distance from the second identifier to the first identifier decreases, the dragging speed of the first dragging operation decreases, and the touch pressure of the first dragging operation decreases; and/or
when the second dragging operation is used to drag the third identifier to move to the position of the first identifier, in a process of outputting the second sound feedback, the loudness and/or the tone of the second sound feedback decrease/decreases as at least one of the following: the distance from the third identifier to the first identifier decreases, the dragging speed of the second dragging operation decreases, and the touch pressure of the second dragging operation decreases.

13. The method according to any one of claims 1 to 12, wherein the second sound feedback and the first sound feedback are a same type of sound.

14. An electronic device, comprising:
a processor (801), a memory (802), and one or more programs, wherein
the one or more programs are stored in the memory (802), the one or more programs comprise instructions, and when the instructions are executed by the processor (801), the electronic device is enabled to perform the method steps according to any one of claims 1 to 13.

15. A computer-readable storage medium, wherein the computer-readable storage medium is configured to store a computer program, and when the computer program is run on a computer, the computer is enabled to perform the method according to any one of claims 1 to 13.

## Patentansprüche

1. Berührungsfeedbackverfahren, das auf eine erste elektronische Vorrichtung angewendet wird, wobei das Verfahren Folgendes umfasst:
Anzeigen einer ersten Schnittstelle (110) als Reaktion auf eine erste Operation, wobei die erste Schnittstelle (110) eine erste Kennung der ersten elektronischen Vorrichtung, eine zweite Kennung einer zweiten elektronischen Vorrichtung und eine dritte Kennung einer dritten elektronischen Vorrichtung umfasst, und die zweite elektronische Vorrichtung und die dritte elektronische Vorrichtung umgebende Vorrichtungen sind, die durch die erste elektronische Vorrichtung durch Abtasten gefunden werden;
als Reaktion auf eine erste Ziehoperation, Ausgeben eines ersten Schallfeedbacks und Herstellen einer Verbindung zu der zweiten elektronischen Vorrichtung, wobei die erste Ziehoperation verwendet wird, um die zweite Kennung zu ziehen, so dass die zweite elektronische Vorrichtung die Verbindung zu der ersten elektronischen Vorrichtung herstellt; und
als Reaktion auf eine zweite Ziehoperation, Ausgeben eines zweiten Schallfeedbacks und Herstellen einer Verbindung zu der dritten elektronischen Vorrichtung, wobei die zweite Ziehoperation verwendet wird, um die dritte Kennung zu ziehen, so dass die dritte elektronische Vorrichtung die Verbindung zu der ersten elektronischen Vorrichtung herstellt, wobei
sich das zweite Schallfeedback von dem ersten Schallfeedback unterscheidet, wenn sich mindestens eines von einem Vorrichtungstyp, einem Volumen, einem Gewicht und einem Material der dritten elektronischen Vorrichtung von einem Vorrichtungstyp, einem Volumen, einem Gewicht und einem Material der zweiten elektronischen Vorrichtung unterscheidet.

2. Verfahren nach Anspruch 1, wobei der Umstand, dass sich das zweite Schallfeedback von dem ersten Schallfeedback unterscheidet, Folgendes umfasst:
sich mindestens eines von einem Schalltyp, einer Lautstärke, einem Ton, einem Schallkanal und einer Dauer des zweiten Schallfeedbacks von einem Schalltyp, einer Lautstärke, einem Ton, einem Schallkanal und einer Dauer des ersten Schallfeedbacks unterscheidet.

3. Verfahren nach Anspruch 1 oder 2, wobei der Umstand, dass sich das zweite Schallfeedback von dem ersten Schallfeedback unterscheidet, Folgendes umfasst:
wenn mindestens eine der folgenden Bedingungen erfüllt ist, unterscheidet sich das zweite Schallfeedback von dem ersten Schallfeedback, wobei die Bedingungen Folgendes umfassen:
ein Abstand von der zweiten elektronischen Vorrichtung zu der ersten elektronischen Vorrichtung unterscheidet sich von einem Abstand von der dritten elektronischen Vorrichtung zu der ersten elektronischen Vorrichtung;
die zweite elektronische Vorrichtung und die dritte elektronische Vorrichtung befinden sich in unterschiedlichen Richtungen der ersten elektronischen Vorrichtung;
ein Abstand von der zweiten Kennung zu der ersten Kennung unterscheidet sich von einem Abstand von der dritten Kennung zu der ersten Kennung;
die zweite Kennung und die dritte Kennung befinden sich in unterschiedlichen Richtungen der ersten Kennung;
eine Ziehgeschwindigkeit der ersten Ziehoperation unterscheidet sich von einer Ziehgeschwindigkeit der zweiten Ziehoperation; und
der Berührungsdruck der ersten Ziehoperation auf einem Touchscreen unterscheidet sich von dem Berührungsdruck der zweiten Ziehoperation auf dem Touchscreen.

4. Verfahren nach einem der Ansprüche 1 bis 3, wobei der Umstand, dass sich das zweite Schallfeedback von dem ersten Schallfeedback unterscheidet, Folgendes umfasst:
wenn mindestens eine der folgenden Bedingungen erfüllt ist, sind/ist die Lautstärke und/oder der Ton des ersten Schallfeedbacks größer als die Lautstärke und/oder der Ton des zweiten Schallfeedbacks, wobei die Bedingungen Folgendes umfassen:
der Abstand von der zweiten Kennung zu der ersten Kennung ist größer als der Abstand von der dritten Kennung zu der ersten Kennung;
der Abstand von der zweiten elektronischen Vorrichtung zu der ersten elektronischen Vorrichtung ist größer als der Abstand von der dritten elektronischen Vorrichtung zu der ersten elektronischen Vorrichtung;
die Ziehgeschwindigkeit der ersten Ziehoperation ist größer als die Ziehgeschwindigkeit der zweiten Ziehoperation;
der Berührungsdruck der ersten Ziehoperation ist größer als der Berührungsdruck der zweiten Ziehoperation;
das Volumen der zweiten elektronischen Vorrichtung ist größer als das Volumen der dritten elektronischen Vorrichtung;
das Gewicht der zweiten elektronischen Vorrichtung ist größer als das Gewicht der dritten elektronischen Vorrichtung; und
eine Materialhärte der zweiten elektronischen Vorrichtung ist größer als eine Materialhärte der dritten elektronischen Vorrichtung.

5. Verfahren nach einem der Ansprüche 1 bis 3, wobei der Umstand, dass sich das zweite Schallfeedback von dem ersten Schallfeedback unterscheidet, Folgendes umfasst:
wenn mindestens eine der folgenden Bedingungen erfüllt ist, ist die Dauer des ersten Schallfeedbacks größer als die Dauer des zweiten Schallfeedbacks, wobei die Bedingungen Folgendes umfassen:
der Abstand von der zweiten Kennung zu der ersten Kennung ist größer als der Abstand von der dritten Kennung zu der ersten Kennung; und
der Abstand von der zweiten elektronischen Vorrichtung zu der ersten elektronischen Vorrichtung ist größer als der Abstand von der dritten elektronischen Vorrichtung zu der ersten elektronischen Vorrichtung.

6. Verfahren nach einem der Ansprüche 1 bis 3, wobei der Umstand, dass sich das zweite Schallfeedback von dem ersten Schallfeedback unterscheidet, Folgendes umfasst:
wenn die folgende Bedingung erfüllt ist, ist eine Schallquellenrichtung, die durch das erste Schallfeedback angegeben wird, eine erste Richtung, wobei die Bedingung Folgendes umfasst: die zweite Kennung befindet sich in der ersten Richtung der ersten Kennung und/oder die zweite elektronische Vorrichtung befindet sich in der ersten Richtung der ersten elektronischen Vorrichtung; und
wenn die folgende Bedingung erfüllt ist, ist eine Schallquellenrichtung, die durch das zweite Schallfeedback angegeben wird, eine zweite Richtung, wobei die Bedingung Folgendes umfasst: die dritte Kennung befindet sich in der zweiten Richtung der ersten Kennung und/oder die dritte elektronische Vorrichtung befindet sich in der zweiten Richtung der ersten elektronischen Vorrichtung.

7. Verfahren nach Anspruch 6, wobei
der Umstand, dass eine Schallquellenrichtung, die durch das erste Schallfeedback angegeben wird, eine erste Richtung ist, Folgendes umfasst:
das erste Schallfeedback umfasst erste linke Schallkanalinformationen und erste rechte Schallkanalinformationen, eine Phasendifferenz zwischen den ersten linken Schallkanalinformationen und den ersten rechten Schallkanalinformationen ist eine erste Phasendifferenz, und die erste Phasendifferenz wird verwendet, um zu bestimmen, dass die Schallquellenrichtung die erste Richtung ist; und
der Umstand, dass eine Schallquellenrichtung, die durch das zweite Schallfeedback angegeben wird, eine zweite Richtung ist, Folgendes umfasst:
das zweite Schallfeedback umfasst zweite linke Schallkanalinformationen und zweite rechte Schallkanalinformationen, eine Phasendifferenz zwischen den zweiten linken Schallkanalinformationen und den zweiten rechten Schallkanalinformationen ist eine zweite Phasendifferenz, und die zweite Phasendifferenz wird verwendet, um zu bestimmen, dass die Schallquellenrichtung die zweite Richtung ist.

8. Verfahren nach einem der Ansprüche 1 bis 7, wobei das Verfahren ferner Folgendes umfasst:
ein erster Abstand von der zweiten Kennung zu der ersten Kennung in der ersten Schnittstelle (110) ist positiv mit einem zweiten Abstand von der zweiten elektronischen Vorrichtung zu der ersten elektronischen Vorrichtung korreliert; und/oder
die erste Richtung der ersten Kennung, in welcher sich die zweite Kennung in der ersten Schnittstelle (110) befindet, ist mit der zweiten Richtung der ersten elektronischen Vorrichtung, in welcher sich die zweite elektronische Vorrichtung befindet, konsistent; und/oder
ein dritter Abstand von der dritten Kennung zu der ersten Kennung in der ersten Schnittstelle (110) ist positiv mit einem vierten Abstand von der dritten elektronischen Vorrichtung zu der ersten elektronischen Vorrichtung korreliert; und/oder
eine dritte Richtung der ersten Kennung, in welcher sich die dritte Kennung in der ersten Schnittstelle (110) befindet, ist mit einer vierten Richtung der ersten elektronischen Vorrichtung, in welcher sich die dritte elektronische Vorrichtung befindet, konsistent.

9. Verfahren nach einem der Ansprüche 1 bis 8, wobei die erste Ziehoperation verwendet wird, um die zweite Kennung zu ziehen, um sich zu einer Position der ersten Kennung zu bewegen und nicht in Kontakt mit der ersten Kennung zu stehen, oder die erste Ziehoperation verwendet wird, um die zweite Kennung zu ziehen, um sich zu einer Position der ersten Kennung zu bewegen und in Kontakt mit der ersten Kennung zu stehen; und/oder die zweite Ziehoperation verwendet wird, um die dritte Kennung zu ziehen, um sich zu der Position der ersten Kennung zu bewegen und nicht in Kontakt mit der ersten Kennung zu stehen, oder die zweite Ziehoperation verwendet wird, um die dritte Kennung zu ziehen, um sich zu der Position der ersten Kennung zu bewegen und in Kontakt mit der ersten Kennung zu stehen.

10. Verfahren nach Anspruch 9, wobei das Verfahren ferner Folgendes umfasst:
wenn die erste Ziehoperation verwendet wird, um die zweite Kennung zu ziehen, um sich zu der Position der ersten Kennung zu bewegen und in Kontakt mit der ersten Kennung zu stehen, umfasst das erste Schallfeedback ein drittes Schallfeedback und ein viertes Schallfeedback, wobei das dritte Schallfeedback ein entsprechendes Schallfeedback von einem Zeitpunkt, zu dem die zweite Kennung beginnt, sich zu bewegen, bis zu einem Zeitpunkt, bevor die zweite Kennung in Kontakt mit der ersten Kennung steht, ist, und das vierte Schallfeedback ein entsprechendes Schallfeedback zu einem Zeitpunkt ist, zu dem die zweite Kennung in Kontakt mit der ersten Kennung steht; und/oder
wenn die zweite Ziehoperation verwendet wird, um die dritte Kennung zu ziehen, um sich zu der Position der ersten Kennung zu bewegen und in Kontakt mit der ersten Kennung zu stehen, umfasst das zweite Schallfeedback ein fünftes Schallfeedback und ein sechstes Schallfeedback, wobei das fünfte Schallfeedback ein entsprechendes Schallfeedback von einem Zeitpunkt, zu dem die dritte Kennung beginnt, sich zu bewegen, bis zu einem Zeitpunkt, bevor die dritte Kennung in Kontakt mit der ersten Kennung steht, ist, und das sechste Schallfeedback ein entsprechendes Schallfeedback zu einem Zeitpunkt ist, zu dem die dritte Kennung in Kontakt mit der ersten Kennung steht.

11. Verfahren nach Anspruch 10, wobei
sich ein Schalltyp des dritten Schallfeedbacks von einem Schalltyp des vierten Schallfeedbacks unterscheidet; und/oder
sich ein Schalltyp des fünften Schallfeedbacks von einem Schalltyp des sechsten Schallfeedbacks unterscheidet.

12. Verfahren nach einem der Ansprüche 1 bis 11, wobei wenn die erste Ziehoperation verwendet wird, um die zweite Kennung zu ziehen, um sich zu der Position der ersten Kennung zu bewegen, die Lautstärke und/oder der Ton des ersten Schallfeedbacks in einem Prozess des Ausgebens des ersten Schallfeedbacks abnimmt/abnehmen, wenn mindestens eines der Folgenden eintritt: der Abstand von der zweiten Kennung zu der ersten Kennung nimmt ab, die Ziehgeschwindigkeit der ersten Ziehoperation nimmt ab und der Berührungsdruck der ersten Ziehoperation nimmt ab; und/oder wenn die zweite Ziehoperation verwendet wird, um die dritte Kennung zu ziehen, um sich zu der Position der ersten Kennung zu bewegen, die Lautstärke und/oder der Ton des zweiten Schallfeedbacks in einem Prozess des Ausgebens des zweiten Schallfeedbacks abnimmt/abnehmen, wenn mindestens eines der Folgenden eintritt: der Abstand von der dritten Kennung zu der ersten Kennung nimmt ab, die Ziehgeschwindigkeit der zweiten Ziehoperation nimmt ab und der Berührungsdruck der zweiten Ziehoperation nimmt ab.

13. Verfahren nach einem der Ansprüche 1 bis 12, das zweite Schallfeedback und das erste Schallfeedback derselbe Typ von Schall sind.

14. Elektronische Vorrichtung, umfassend:
einen Prozessor (801), einen Speicher (802) und ein oder mehrere Programme, wobei
das eine oder die mehreren Programme in dem Speicher (802) gespeichert sind, das eine oder die mehreren Programme Anweisungen umfassen, und, wenn die Anweisungen durch den Prozessor (801) ausgeführt werden, die elektronische Vorrichtung in die Lage versetzt wird, die Verfahrensschritte nach einem der Ansprüche 1 bis 13 durchzuführen.

15. Computerlesbares Speichermedium, wobei das computerlesbare Speichermedium dazu konfiguriert ist, ein Computerprogramm zu speichern, und, wenn das Computerprogramm auf einem Computer ausgeführt wird, der Computer in die Lage versetzt wird, das Verfahren nach einem der Ansprüche 1 bis 13 durchzuführen.

## Revendications

1. Procédé de rétroaction tactile, appliqué à un premier dispositif électronique, dans lequel le procédé comprend :
l'affichage d'une première interface (110) en réponse à une première opération, dans lequel la première interface (110) comprend un premier identifiant du premier dispositif électronique, un deuxième identifiant d'un deuxième dispositif électronique, et un troisième identifiant d'un troisième dispositif électronique, et le deuxième dispositif électronique et le troisième dispositif électronique sont des dispositifs environnants qui sont trouvés par le premier dispositif électronique par balayage ;
en réponse à une première opération de glissement, l'émission d'une première rétroaction sonore, et l'établissement d'une connexion avec le deuxième dispositif électronique, dans lequel la première opération de glissement est utilisée pour glisser le deuxième identifiant de sorte que le deuxième dispositif électronique établisse la connexion avec le premier dispositif électronique ; et
en réponse à une seconde opération de glissement, l'émission d'une deuxième rétroaction sonore, et l'établissement d'une connexion avec le troisième dispositif électronique, dans lequel la seconde opération de glissement est utilisée pour faire glisser le troisième identifiant de sorte que le troisième dispositif électronique établisse la connexion avec le premier dispositif électronique, dans lequel
la deuxième rétroaction sonore est différente de la première rétroaction sonore lorsqu'au moins l'un d'un type de dispositif, d'un volume, d'un poids et d'un matériau du troisième dispositif électronique est différent d'un type de dispositif, d'un volume, d'un poids et d'un matériau du deuxième dispositif électronique.

2. Procédé selon la revendication 1, dans lequel le fait que la deuxième rétroaction sonore est différente de la première rétroaction sonore comprend ce qui suit :
au moins l'un d'un type de son, d'une intensité, d'une tonalité, d'un canal sonore et d'une durée de la deuxième rétroaction sonore est différent d'un type de son, d'une intensité, d'une tonalité, d'un canal sonore et d'une durée de la première rétroaction sonore.

3. Procédé selon la revendication 1 ou 2, dans lequel le fait que la deuxième rétroaction sonore est différente de la première rétroaction sonore comprend ce qui suit :
lorsqu'au moins l'une des conditions suivantes est remplie, la deuxième rétroaction sonore est différente de la première rétroaction sonore, dans lequel les conditions comprennent ce qui suit :
une distance entre le deuxième dispositif électronique et le premier dispositif électronique est différente d'une distance entre le troisième dispositif électronique et le premier dispositif électronique ;
le deuxième dispositif électronique et le troisième dispositif électronique sont situés dans des directions différentes du premier dispositif électronique ;
une distance entre le deuxième identifiant et le premier identifiant est différente d'une distance entre le troisième identifiant et le premier identifiant ;
le deuxième identifiant et le troisième identifiant sont situés dans des directions différentes du premier identifiant ;
une vitesse de glissement de la première opération de glissement est différente d'une vitesse de glissement de la seconde opération de glissement ; et
la pression tactile de la première opération de glissement sur un écran tactile est différente de la pression tactile de la seconde opération de glissement sur l'écran tactile.

4. Procédé selon l'une quelconque des revendications 1 à 3, dans lequel le fait que la deuxième rétroaction sonore est différente de la première rétroaction sonore comprend ce qui suit :
lorsqu'au moins l'une des conditions suivantes est remplie, le volume et/ou la tonalité de la première rétroaction sonore est/sont supérieur(s) au volume et/ou à la tonalité de la deuxième rétroaction sonore, dans lequel les conditions comprennent ce qui suit :
la distance entre le deuxième identifiant et le premier identifiant est supérieure à la distance entre le troisième identifiant et le premier identifiant ;
la distance entre le deuxième dispositif électronique et le premier dispositif électronique est supérieure à la distance entre le troisième dispositif électronique et le premier dispositif électronique ;
la vitesse de glissement de la première opération de glissement est supérieure à la vitesse de glissement de la seconde opération de glissement ;
la pression tactile de la première opération de glissement est supérieure à la pression tactile de la seconde opération de glissement ;
le volume du deuxième dispositif électronique est supérieur au volume du troisième dispositif électronique ;
le poids du deuxième dispositif électronique est supérieur au poids du troisième dispositif électronique ; et
la dureté de matériau du deuxième dispositif électronique est supérieure à la dureté de matériau du troisième dispositif électronique.

5. Procédé selon l'une quelconque des revendications 1 à 3, dans lequel le fait que la deuxième rétroaction sonore est différente de la première rétroaction sonore comprend ce qui suit :
lorsqu'au moins l'une des conditions suivantes est remplie, la durée de la première rétroaction sonore est supérieure à la durée de la deuxième rétroaction sonore, dans lequel les conditions comprennent ce qui suit :
la distance entre le deuxième identifiant et le premier identifiant est supérieure à la distance entre le troisième identifiant et le premier identifiant ; et
la distance entre le deuxième dispositif électronique et le premier dispositif électronique est supérieure à la distance entre le troisième dispositif électronique et le premier dispositif électronique.

6. Procédé selon l'une quelconque des revendications 1 à 3, dans lequel le fait que la deuxième rétroaction sonore est différente de la première rétroaction sonore comprend ce qui suit :
lorsque la condition suivante est remplie, une direction de source sonore indiquée par la première rétroaction sonore est une première direction, dans lequel la condition comprend : le deuxième identifiant est situé dans la première direction du premier identifiant, et/ou le deuxième dispositif électronique est situé dans la première direction du premier dispositif électronique ; et
lorsque la condition suivante est remplie, la direction de source sonore indiquée par la deuxième rétroaction sonore est une deuxième direction, dans lequel la condition comprend ce qui suit : le troisième identifiant est situé dans la deuxième direction du premier identifiant, et/ou le troisième dispositif électronique est situé dans la deuxième direction du premier dispositif électronique.

7. Procédé selon la revendication 6, dans lequel
le fait qu'une direction de source sonore indiquée par la première rétroaction sonore est une première direction comprend ce qui suit :
la première rétroaction sonore comprend les informations de premier canal sonore gauche et les informations de premier canal sonore droit, une différence de phase entre les informations de premier canal sonore gauche et les informations de premier canal sonore droit est une première différence de phase, et la première différence de phase est utilisée pour déterminer que la direction de source sonore est la première direction ; et
le fait qu'une direction de source sonore indiquée par la deuxième rétroaction sonore est une deuxième direction comprend ce qui suit :
la deuxième rétroaction sonore comprend les informations de second canal sonore gauche et les informations de second canal sonore droit, une différence de phase entre les informations de second canal sonore gauche et les informations de second canal sonore droit est une seconde différence de phase, et la deuxième différence de phase est utilisée pour déterminer que la direction de source sonore est la deuxième direction.

8. Procédé selon l'une quelconque des revendications 1 à 7, dans lequel le procédé comprend en outre ce qui suit :
une première distance entre le deuxième identifiant et le premier identifiant dans la première interface (110) est positivement corrélée avec une deuxième distance entre le deuxième dispositif électronique et le premier dispositif électronique ; et/ou la première direction du premier identifiant dans lequel se trouve le deuxième identifiant dans la première interface (110) est cohérente avec la deuxième direction du premier dispositif électronique dans lequel se trouve le deuxième dispositif électronique ; et/ou
une troisième distance entre le troisième identifiant et le premier identifiant dans la première interface (110) est positivement corrélée avec une quatrième distance entre le troisième dispositif électronique et le premier dispositif électronique ; et/ou une troisième direction du premier identifiant dans lequel se trouve le troisième identifiant dans la première interface (110) est cohérente avec une quatrième direction du premier dispositif électronique dans lequel se trouve le troisième dispositif électronique.

9. Procédé selon l'une quelconque des revendications 1 à 8, dans lequel
la première opération de glissement est utilisée pour faire glisser le deuxième identifiant vers une position du premier identifiant sans qu'il soit en contact avec le premier identifiant, ou la première opération de glissement est utilisée pour faire glisser le deuxième identifiant vers une position du premier identifiant et en contact avec le premier identifiant ; et/ou
la seconde opération de glissement est utilisée pour faire glisser le troisième identifiant vers la position du premier identifiant sans qu'il soit en contact avec le premier identifiant, ou la seconde opération de glissement est utilisée pour faire glisser le deuxième identifiant vers une position du premier identifiant et en contact avec le premier identifiant.

10. Procédé selon la revendication 9, dans lequel le procédé comprend en outre ce qui suit :
lorsque la première opération de glissement est utilisée pour faire glisser le deuxième identifiant à la position du premier identifiant et en contact avec le premier identifiant, la première rétroaction sonore comprend une troisième rétroaction sonore et une quatrième rétroaction sonore, dans lequel la troisième rétroaction sonore est une rétroaction sonore correspondante à partir d'un moment où le deuxième identifiant commence à se déplacer jusqu'à un moment avant que le deuxième identifiant soit en contact avec le premier identifiant, et la quatrième rétroaction sonore est une rétroaction sonore correspondante à un moment où le deuxième identifiant est en contact avec le premier identifiant ; et/ou
lorsque la seconde opération de glissement est utilisée pour faire glisser le troisième identifiant à la position du premier identifiant et en contact avec le premier identifiant, la deuxième rétroaction sonore comprend une cinquième rétroaction sonore et une sixième rétroaction sonore, dans lequel la cinquième rétroaction sonore est une rétroaction sonore correspondante à partir d'un moment où le troisième identifiant commence à se déplacer jusqu'à un moment avant que le troisième identifiant soit en contact avec le premier identifiant, et la sixième rétroaction sonore est une rétroaction sonore correspondante à un moment où le troisième identifiant est en contact avec le premier identifiant.

11. Procédé selon la revendication 10, dans lequel
un type sonore de la troisième rétroaction sonore est différent d'un type sonore de la quatrième rétroaction sonore ; et/ou
un type sonore de la cinquième rétroaction sonore est différent d'un type sonore de la sixième rétroaction sonore.

12. Procédé selon l'une quelconque des revendications 1 à 11, dans lequel
lorsque la première opération de glissement est utilisée pour faire glisser le deuxième identifiant vers la position du premier identifiant, dans un processus d'émission de la première rétroaction sonore, l'intensité et/ou la tonalité de la première rétroaction sonore diminue(nt) pour au moins l'une des raisons suivantes : la distance entre le deuxième identifiant et le premier identifiant diminue, la vitesse de glissement de la première opération de glissement diminue, et la pression tactile de la première opération de glissement diminue ; et/ou
lorsque la seconde opération de glissement est utilisée pour faire glisser le troisième identifiant vers la position du premier identifiant, dans un processus d'émission de la deuxième rétroaction sonore, l'intensité et/ou la tonalité de la deuxième rétroaction sonore diminue(nt) pour au moins l'une des raisons suivantes : la distance entre le troisième identifiant et le premier identifiant diminue, la vitesse de glissement de la seconde opération de glissement diminue, et la pression tactile de la seconde opération de glissement diminue.

13. Procédé selon l'une quelconque des revendications 1 à 12, dans lequel la deuxième rétroaction sonore et la première rétroaction sonore sont du même type de son.

14. Dispositif électronique, comprenant :
un processeur (801), une mémoire (802) et un ou plusieurs programmes, dans lequel
les un ou plusieurs programmes sont stockés dans la mémoire (802), les un ou plusieurs programmes comprennent des instructions, et lorsque les instructions sont exécutées par le processeur (801), le dispositif électronique est activé pour exécuter les étapes de procédé selon l'une quelconque des revendications 1 à 13.

15. Support de stockage lisible par ordinateur, dans lequel le support de stockage lisible par ordinateur est configuré pour stocker un programme informatique, et lorsque le programme informatique fonctionne sur un ordinateur, l'ordinateur est activé pour exécuter le procédé selon l'une quelconque des revendications 1 à 13.
